# EUROPEAN PATENT SPECIFICATION

(11) **EP 2 363 276 B1**
(45) Date of publication and mention of the grant of the patent: **08.07.2020**
(21) Application number: 11164672.5
(22) Date of filing: 16.01.2004
(51) Int. Cl.: B29D 23/20, B29C 45/72, B29C 71/02

(54) **Methods for forming articles having improved environmental stress crack resistance**
Verfahren zur Herstellung von Artikeln mit verbesserter Rissbeständigkeit infolge von Umweltbelastung
Procédés de formation d'articles dotés d'une résistance de craquage de tension environnementale améliorée

(30) Priority: 16.01.2003 AU 2003900292; 24.03.2003 AU 2003901342; 24.04.2003 AU 2003901952
(43) Date of publication of application: 07.09.2011
(62) Divisional of application: 09013816.5
(73) Proprietor: VIVA HEALTHCARE PACKAGING LIMITED, 2 Heung Yip Road Wong Chuk Hang, Hong Kong (CN)
(72) Inventor: Jacobs, Ian Orde Michael, Mount Eliza Vic 3930 (AU)
(74) Representative: Kirsch, Susan Edith

(56) References cited:
- EP-A1- 0 114 391
- EP-A1- 1 072 643
- WO-A-98/46409
- WO-A1-99/52955
- AU-A4- 2002 100 211
- US-A- 5 516 563
- US-A1- 2002 045 712

## Description

### Field of the Invention

The present invention relates to a process for the manufacture of flexible thin-walled articles in form of tubes.

With respect to the disclosure provided in this description it is noted that the invention and thus the extent of protection is defined solely by the appended claims.

### Discussion of the Prior Art

WO98/46409 discloses a process for the manufacture of thin-walled articles.

Thin-walled tubular containers, such as those used in the cosmetics industry, are currently produced mainly by a combination of extrusion and cutting-to-length of the tube body, injection moulding of the head and shoulders and the welding of the body to the head and shoulders. Low Melt Flow Index (MFI) polyethylene (MFI generally less than 2) is the preferred polymer for tube manufacture as it generally imparts the properties of good "feel" and flexibility required by customers and is suitable for extrusion processing. In addition, low MFI low density polyethylene (LDPE) offers sufficient product resistance and barrier properties to make it suitable for most products currently packed into tubes. In cases where the barrier properties of polyethylene are inadequate for particular applications, medium density polyethylene (MDPE), high density polyethylene (HDPE), polypropylene (PP) and multilayer polymer films are commonly used. Because the body of the tube is extruded, low MFI polymers with inherently good ESCR are able to be used in their manufacture. In addition, being a relatively low shear rate process, the extrusion process introduces minimal stresses and molecular orientation of the polymer into the tube body during manufacture. The use of polymers with inherently good ESCR, the relative lack of molecular orientation in extruded and extrusion/blow-moulded tubes as well as the relatively low pressures and processing speeds inherent in the extrusion process results in extruded tubes having low built-in stresses and inherently good ESCR. Consequently, stress relief of extruded tubes by annealing is of minimal value for the vast majority of applications and tube types.

While the injection moulding of flexible thin walled articles such as tubes has been proposed, prior to the developments described in PCT/AU98/00255 (the '255 patent), it has not been possible to injection mould such articles having relatively long, thin sections without the articles being too susceptible to failure to be of commercial or practical use. The main problems have been associated with the polymers used to injection mould tubes, in that the process of injection moulding a cylindrical or other shaped tube requires the polymer to simultaneously have a high MFI to enable the polymer to flow down the long, narrow and curved path dictated by the tube shape without the use of excessive injection pressures, yet to have sufficiently good mechanical properties to be able to withstand handling and resist the stress cracking effects of many of the products that will be packed in it. To injection mould a tube, requires the polymer/polymer blend to have flow properties capable of forming moulded parts with radii and a length/thickness ratio of 100 and often much higher. Typically the polymer or polymer blends are required to have an MFI of greater than 10, preferably greater than 20, more preferably greater than 30 and frequently greater than 50. It is well known that the physical properties of polymers, particularly ESCR, decrease significantly as the MFI increases, so the inherent ESCR properties of polymer/polymer blends with MFIs required for injection moulded tubes are significantly and inherently lower than those for extruded tubes. To compound this problem, forcing a polymer to flow in a mould with such dimensions introduces severe stresses into the polymer, these stresses being "frozen" into the article thus produced when the polymer rapidly cools below its crystallising temperature before these stresses can be relieved. These stresses result in the tube having surprisingly different and deteriorated properties relative to the other products moulded from the same polymers under less severe moulding conditions.

Further stresses are introduced into injection moulded tubes when they are filled with product and then crimped and sealed - most often by heat sealing or ultrasonic welding. This process involves bending the 'open' end of the tube back on itself through an angle of up to 180° to form a fold at the edge of the seal. This fold is in the direction of the flow of the polymer during moulding, which direction having been demonstrated to be the direction of maximum weakness of the moulded product. This 'folded and sealed' area, where the tube is required to be deformed in order to effect a seal, is an area of the injection-moulded tube particularly susceptible to stress and flex cracking. Similarly, the body of the tube is permanently distorted, and consequently additionally and permanently stressed, by the crimping/sealing process, as can be readily seen from the distorted shape of the crimped and sealed tube relative to its uncrimped and unsealed shape. These stresses, especially those induced by permanent distortion of the article after crimping and sealing, but also those imposed during the squeezing and flexing of the tube during use, have the effect of significantly reducing the ESCR and other physical properties of the polymers that make up the injection moulded article, thereby making it necessary to use polymers that display unusually good ESCR and other physical properties when moulded into the desired articles. Such polymers/blends may have a number of disadvantages relative to other polymers/blends, such as being more expensive, requiring longer cooling times (and hence longer cycle times), having higher stiffness (ie. poorer 'feel'), requiring more intense or expensive compounding, etc.

The following examples illustrate the exceptionally high level of stresses that are moulded into tubes when they are manufactured using the injection moulded process as opposed to the extrusion process.

Tubes with 120 X 35mm dimensions were injection moulded using DuPont 2020T polymer, a 1.1 MFI polymer extensively used in commercial extruded tube manufacture and which DuPont describes as "especially suited for injection moulded closure and extruded tubing where flexibility and maximum resistance to environmental stress cracking is required". The injection-moulded tubes were moulded with extreme difficulty, requiring very high injection pressures and temperatures simply to get the 2020T to fill the mould. In each moulding significant degrees of core shifting/flexing were noted, due no doubt to the extremely high injection pressures that were required. In addition, it was noted that the tubes had virtually no resistance to flexing in the direction of the material flow, with significant cracking being induced with less than 5 manual squeezes of the tube. The environmental stress cracking of the same tubes was tested using the ESCR test as herein described and, in spite of claims of "maximum resistance" to environmental stress cracking, was found to be totally inadequate for moulding thin-walled tubes by injection moulding. This is in stark contrast with its status as a 'polymer of choice' for tubes made by the extrusion process. The dramatic degradation of the properties of 2020T when injection moulded is almost exclusively due to the exceptionally high level of moulded-in and oriented stresses relative to those in tubes extruded from the same material.

In another illustration of the very high level of moulded-in stresses inherent in injection moulded tubes, Dowlex 2517, a 25 MFI LLDPE, was moulded into 150 X 50mm tubes. In a pamphlet on its Dowlex LLDPEs, Dow advises that LLDPEs have substantially better ESCR properties than equivalent high pressure LDPE. To illustrate the difference, a Dow pamphlet states that in one comparative test a high flow Dowlex LLDPE has an ESCR in oil some 80 times better than that achieved by a high pressure LDPE with the similar density and MFI (5700 hrs compared to 70 hrs). It further states that the LLDPE has an ESCR approximately 10 times better than the LDPE when immersed in a 10% Teric solution at 50°C (225 hrs compared to 26 hrs). However, contrary to these observations, we have found that when these polymers are moulded in the form of thin walled tubes and ESCR subsequently tested using the ESCR test as herein described, both Dow's 'Dowlex' LLDPE 2517 and Kemcor's LD 8153 (a high pressure LDPE with similar MFI and density) performed poorly in 10% Teric N9 at 50°C, and both failed within 20 minutes, an ESCR that is of the order of 600 times less than that indicated in the pamphlet. The extreme degradation in the ESCR performance of both polymers when injection moulded into tubes is almost exclusively the result of the high level of moulded-in and oriented stresses in the injection moulded tubes.

As an indication of the extent of the increase in strain in the area of a tube that is folded and sealed relative to the unsealed (i.e. open) tube, the strain on the area resulting from sealing was calculated using the formula:
Strain in polymer = Radius of fold/Square of the thickness of the strip.

Assuming a nominal radius for a flat polymer strip of 1 metre and a strip thickness of 0.5mm (a typical wall thickness for a tube), the strain on the unsealed polymer is 0.00025. When sealed, the radius of the strip at the edge of the seal is of the order of 0.65mm, resulting in a calculated strain of 0.385. In other words, sealing the tube results in an increase in strain in the polymer of over 1600 times that in an unsealed tube. For extruded tubes, with their inherently higher ESCR polymer and significantly lower moulded-in processing stresses, this increase in strain presents few problems in terms of ESCR and/or tear strength performance. That is, annealing articles made using these polymers in combination with the extrusion process is not likely to result in noticeable and/or commercially valuable improvements in ESCR and tear strength of the article. However, the applicant has found that when injection moulding thin wall flexible articles, with their significantly higher moulded-in and oriented stresses and being formed from intrinsically lower ESCR polymers and hence having greater inherent susceptibility to flex and ESCR failure, annealing can make a significant difference to both the ESCR and/or tear strength of the article. Such improvements may mean the difference between functionality and non-functionality of the article in terms of its commercial application.

We have now found that annealing a flexible injection moulded thin walled article just before, during or after the article has been filled and/or distorted to its final required shape significantly improves the ESCR and a number of other physical properties of the article, such as resistance to tearing in the direction of the polymer flow when measured using the Gullwing Tear test method (ASTM D-1004). These improvements are most noticeable in the areas of the article that have had additional stresses imposed on them such as occur as a result of any distortion of the article during and subsequent to sealing or having load imposed on it by, for example, stacking. An additional benefit of the annealing of the present invention is that increasing their ESCR etc. enables the use of polymers/blends for the manufacture of flexible thin-walled articles that would, in their unannealed condition, result in flexible thin walled articles that are either marginal or unsuitable for packaging particular products. During the annealing process the article may, if heated or otherwise treated sufficiently to soften, and/or in cases where the article is sufficiently supported to prevent unwanted distortion of the article, melt the polymer, be reshaped by the application of appropriate forces by various equipment.

While not wishing to be bound by the proposed theory, it is believed that the rapid cooling of the polymer during the injection moulding step from a molten state to below the solidification temperature of the polymer results in various stresses and strains being captured in the solid piece, and that further stresses are introduced as a result of the distortion of the article resulting from the sealing process. These stresses make the article more susceptible to attack by stress crack agents and physical flexing, and hence to failure. This is particularly the case in the period immediately after filling and sealing when, due to the distortion of the moulding resulting from sealing, the stresses within the moulding are at their highest (to an extent, they 'relax' and dissipate over an extended time) and the stress crack agent is in direct contact with the article and can 'attack' the highly stressed areas in the period subsequent to filling and sealing to cause failure. It is believed that by annealing the polymer, the stresses are relieved before the stress crack agents are able to 'attack' the stressed polymer in order to cause failure. If the stresses are not immediately relieved, it is believed that for many polymer formulations the stress crack agent is able to cause failure of the article before the 'normal' relaxation of the polymer is able to reduce the susceptibility to article failure.

The degree of moulded-in stresses, and hence the degree of reduction in ESCR and other property performance can vary somewhat from moulding to moulding and over time. Thus it is difficult to reliably and accurately compensate for the variation in ESCR reduction between mouldings in the absence of annealing treatment. A further complication is that due to the gradual reduction in stresses over time together with the fact that the extent of stress reduction will depend on the conditions (primarily time and temperature) under which the articles are stored prior to and after filling and sealing, it is not possible to reliably and consistently forecast how long it may take for all tubes made from a particular polymer formulation to become suitable for use due to natural stress reduction. For this reason amongst others, in order to minimise the possibility of commercial failure due to inadequate ESCR and other property performance, it is currently generally necessary to use polymers with proven exceptionally good ESCR performance when in a stressed state. This requirement has a number of potentially negative aspects, in particular in the areas of potentially higher polymer/unit cost, increased cycle times and less-than-ideal 'feel' and flexibility. It is therefore advantageous if the moulded-in stresses can be relieved before they can substantially adversely affect the commercial performance of the thin walled article.

It has been found that, provided the moulded-in stresses in the injection moulded article are relieved to a greater or lesser extent before the stress crack potential of the product that is filled into the article has sufficient time in contact with the polymer in its stressed state to cause or initiate cracking, flexible thin walled injection moulded articles with improved ESCR and other property performance can be produced. Further, it has been found that annealing the articles enables a much wider range of polymers and polymer blends to be used in the manufacture of commercially useful flexible thin walled articles than is the case if annealing is not practiced.

If there is a significant time lapse between the moulding and filling & sealing operations (eg. if the article is moulded in one location, packed and then shipped to another location for filling and sealing) and it is desired to effect annealing of the moulding prior to the article being shipped - most conveniently, immediately post moulding - many of the benefits of annealing just prior to, during and/or after distortion of the article can still be achieved by annealing post moulding. The benefits of this may not as pronounced as those that can be achieved by annealing after the article has been distorted, but may, depending on the polymer formulation and moulding conditions, nevertheless be worthwhile.

The benefits of annealing post moulding but pre filling are most noticeable in areas of the moulding that are subjected to least additional stresses upon crimping and sealing. These areas are most frequently those that are relatively distant to the 'crimp and seal' area - for example, those areas relatively near the head and shoulders of a tube. We have found that areas of the moulding that are annealed, allowed to cool (if the annealing process elevates the temperature of the moulding above its preannealing temperature) and then subjected to considerable distortion such as occurs in and around the sealed area during a crimp and seal operation may manifest dramatically deteriorated ESCR performance relative to the same considerably distorted areas in equivalent unannealed mouldings. This is illustrated by the ESCR test as herein described, in which three sets of strips of the polymer blend taken from the same area of the mouldings were subjected to said ESCR test. One set of strips was annealed after stapling, another set was not annealed and the third set of strips was annealed prior to stapling. The ESCR results were as follows:
- Only 4% of strips annealed after stapling failed within 190 hrs
- 25% of the unannealed strips failed within 190 hrs
- Virtually all (94%) of strips annealed before stapling failed within only 3.5 hrs.

### Description of the Invention

As the above results illustrate, annealing tubes when they are in a stressed state significantly improves their ESCR relative to unannealed tubes, whereas annealing tubes in an unstressed state and subsequently stressing them results in dramatically reduced ESCR.

Thus, according to a first aspect of the present invention there is provided a process for the manufacture of flexible thin-walled articles comprising injection moulding a body of the article from a plastics material; adapting the body to form the article; and annealing the plastics material.

Annealing is generally defined as the process for removing or diminishing the strains and stresses in thermoplastics. It is often achieved by heating the substance to be annealed and then allowing it to gradually cool. Two successful techniques often employed when annealing thermoplastics include one which withdraws the thermoplastics from a heat source, and the other which causes the heat from the heat source to diminish. Both techniques are often referred to as bulk annealing techniques since they involve heating the interior and exterior of the thermoplastics. The former is generally achieved in lehrs and the latter is generally achieved in ovens. Additional techniques for bulk annealing thermoplastics include those which employ infrared radiation. Thermal annealing is often the preferred method of annealing since simple equipment and techniques are widely and inexpensively available to practice the step. In other, less preferred embodiments, the annealing can be practiced by applying pressure, compression, or tension for a short time.

It is of increasing interest to reduce the stresses and strains of thermoplastics without employing bulk annealing techniques such as the above-described. Accordingly, a process for reducing strains in thermoplastics by surface annealing may be employed which unexpectedly and simultaneously preserves the physical and chemical properties of the thermoplastics. Surface annealing is defined as heating the outer layer of the thermoplastic which is the external layer of the thermoplastic that is often no more than half the thickness of the area to be annealed, for example, 0.25mm thick in the case of a 0.5mm wall-thickness article. Moreover, there is no limitation with respect to the heat source being utilized in this surface annealing other than that it does not cause the outer layer of the thermoplastic and the internal portion of the thermoplastic to be heated to the same temperature, wherein the internal portion is defined as any part of the thermoplastic not including the outer layer as previously defined. Thus heat may penetrate the internal portion; however, the internal portion is cooler than the outer layer after the outer film layer is surface annealed. Therefore, bulk annealing is prevented, Surface annealing is particularly effective in terms of increasing the ESCR of a thin walled flexible article when the surface that is annealed is the surface that will come into contact with the stress crack agent. The interior wall of a tube or other container, in preference to the exterior wall of a tube or other container, is an example of a surface for which surface annealing is particularly effective. This is because an annealed interior wall of a tube or other container presents the stress crack agent with a surface with reduced stress and hence an improved ESCR relative to an unannealed interior wall, thereby minimising the chances of the stress crack agent being able to initiate stress cracking that could eventually lead to the failure of the tube or container. If the outer surface of the tube or container is the annealed surface, the stress crack agent is able to initiate cracking in the unannealed interior surface with which it is in immediate contact, thereby potentially weakening the tube or container. Annealing of the interior surface of a tube or other container may be achieved by the blowing of hot air onto said surface, the close proximity of a source of radiant heat to the interior surface or other suitable means familiar to those skilled in the art.

Annealing of the injection moulded thin-walled article according to this aspect of the invention may be facilitated by one or more of a variety of techniques. For example, the annealing step may include subjecting the plastics material of the article to various types of electromagnetic radiation, such as far infra-red, infra-red, ultra-violet and microwave radiation. Alternatively, sonic, supersonic and/or ultrasonic energy, electrical energy, electron arc, electron beam, plasma (e.g., corona, glow discharge, etc.), steam, heated gas (eg. hot air), magnetic fields, ionising radiation, lasers, radio frequency and direct contact with heated or vibrating surfaces may be employed. Preferably, the annealing step is carried out by application of heat to the plastics material immediately before, during or immediately after the body is adapted to form the article.

According to a particular embodiment, the annealing process is carried out in situ by filling the article with a medium having a sufficiently high temperature to facilitate annealing of the article through the transfer of heat from the medium to the article itself. In this case, the heated medium may be inserted before, during or immediately after the distortion (if any) of the article. Due to the thin-wall nature of the article, the temperature of the areas of the articles that come into contact with, or are in relatively close proximity to, the medium may assume a temperature close or equal to that of the medium itself. For example, although the specific area of the article that will be sealed should preferably not come into direct contact with the medium, once the medium has been introduced into the article the temperature of the area to be sealed will tend towards that of the medium. Provided such temperature is high enough to initiate annealing, it will result in the partial or complete annealing of the areas of the article, including the area of the article to be sealed. The temperature of the in situ annealing medium is preferably greater than 18°C, more preferably greater than 22°C, even more preferably greater than 25°C, yet even more preferably greater than 30°C, and most preferably greater than 35°C.

Alternative heat-based annealing processes include immersing the article in, or passing the article through a bath, oven or other apparatus containing or able to direct at or subject the article to a warming liquid or gas or other annealing agent. For example, the articles can be immersed into a hot aqueous bath for sufficient time to heat them to within the desired temperature range. The particular residence time within the hot aqueous bath can depend on a variety of factors such as the shape and/or thickness of the articles and whether the aqueous bath is quiescent or agitated, whether the bath size to number of articles results in fluctuation of bath temperature, and other factors. This annealing method is particularly useful in cases where it is desirable that the filled contents of the article are also heated above a particular temperature, such as in retorting of some foods. The pieces can then be removed from the aqueous bath, dried, and cooled to ambient temperature.

In other preferred embodiments, radiant heating is employed, such as heating with infrared light. One advantage of radiant heating especially with infrared light is the rapidity with which the heating step can be practiced. Still another advantage is that a separate drying step can be eliminated.

When one or more types of electromagnetic radiation is the annealing agent, an article comprised of the polymer should be exposed to the radiation for a time period at least sufficient to absorb enough energy to stress relieve the polymer against stress cracking therein. Exposure occurs at one or more ranges of frequencies which are capable of being absorbed by the polymer and which are effective for stress relieving without or substantially without causing heat induced softening or flowing of the polymer. The electromagnetic radiation is selected from infrared, visible, ultraviolet, microwave, radio, laser and other types of electromagnetic radiation.

The annealing treatment may, depending on the plastics material and the article, be carried out prior to, during or after the distortion of the article. If the annealing process is carried out prior to the distortion of the article, it is preferred that the effects of the annealing process are still impacting on the polymer during the distortion process. For example, if heat is used to effect annealing and the heat source is removed or significantly reduced prior to distortion of the article, the plastics material should preferably still be sufficiently warm during and after the distortion process to enable the annealing of the distorted article to take place. Another method of annealing using heat is to store the final packaged product in heated or naturally warm storage areas, the temperature in which is constantly at or periodically raised or allowed to rise to 22°C or more, more preferably 25°C or more, yet more preferably 27°C or more, even more preferably 30°C or more and most preferably 35°C or more for sufficient time to anneal the article or part thereof as measured by an improvement in ESCR and/or Gullwing tear resistance in the direction of the flow of the polymer relative to the unannealed article or part thereof.

The entire article does not necessarily need to be annealed to achieve the beneficial effects of this aspect of the invention. If desired, the annealing process can be directed to one or more areas of the article in which it has been determined annealing will have particularly beneficial effects, such as those areas in the injection moulded article that are most susceptible to ESCR or other mechanical failure. Partial annealing of the article may be achieved by, for example, annealing some parts of the article by infrared radiation while shielding other parts of the article from the radiation. In the case of a tube, areas that may be beneficially selectively annealed include the crimped/sealed and adjacent area and other areas of the tube that are distorted and consequently have additional and unusual stresses imposed on them as a result of the crimping/sealing process.

In addition, annealing can take place in one or more stages. For example, part of the article may first be subjected to annealing by, for example, filling it with a warm fluid medium. This will anneal mainly those areas of the article that are in contact with and/or close proximity to the warm fluid medium. When the article is a tube, this initial annealing process will primarily anneal the body of the tube, although if the medium is sufficiently warm and sufficient time is allowed, it may also anneal other areas of the tube, such as the area to be crimped and sealed. Subsequent to the initial annealing, and in a separate operation, the tube may then be crimped and sealed at the open end, which will anneal this portion of the tube.

The extent of the desired annealing of a particular article can be determined by experimentation, and may vary depending on the extent/intensity of the deleterious effects of product to be packed into the article on the article as well as the nature of the plastics material used to mould the article and the moulding conditions used in the manufacture of the article and the desired properties of the treated article. Particularly deleterious products (ie. with high stress cracking potential) may beneficially be packed into articles which have been more extensively annealed than the same article intended for use with a less deleterious product. Similarly, articles that have higher levels of stress due for example to their shape, the conditions of their manufacture and/or the extent of additional stresses imposed on them due to filling, crimping and sealing, etc. may benefit from more intensive annealing than would otherwise be the case.

It is further noted herein that there is no limitation with respect to the orientation of the thermoplastics to the heat sources employed. Therefore, the heat source and the thermoplastic may be moving, the heat source may move while the thermoplastic remains stationary or vice versa.

Once heated to the desired temperature range, the article may be cooled or allowed to cool as desired. The cooling step can similarly comprise various cooling techniques. Especially preferred for use herein are dry cooling techniques. For example, the articles can be cooled to room temperature with forced air convection cooling. Alternatively, the articles can be allowed to cool naturally, i.e. without accelerated cooling means. The air can be at room temperature or, if desired, can be chilled to shorten the cooling steps duration. In still another variation, ultrasonic heating can be used in substitution for the radiant heating. In still other variations, forced hot air convection heating can be employed. The pieces can be fed into a oven or other heating zones with various combinations of radiant and convection heating.

The plastics material of the article according to this aspect of the invention is not particularly limited provided that it is capable of being injection moulded into a flexible thin-walled article. Indeed, preferred forms of the plastics material are hereafter described in accordance with further aspects of the invention.

In general, as described in PCT/AU98/00255, it has been found that it is possible to injection mould flexible thin-walled articles having relatively long thin-walled sections by selection of the polymers used in the injection moulding process having a time to failure of greater than 10 hours when tested according to the following ESCR test procedure:
i) a plurality (preferably 6 or more) strips of the polymer or polymer blend incorporating any post moulding treatment intended for the final article having the cross-sectional dimensions of 0.65 mm in thickness and 10 mm in width are injection moulded under high shear, long flow length conditions, the same as or similar to those intended for use in the manufacture of the flexible thin-walled article;
ii) the strips are bent back upon themselves and stapled 3 mm from the bend;
iii) the bent strips are immersed in a solution of a stress crack agent such as an ethoxylated nonylphenol, eg. a 10% solution of Teric N9 (nonylphenol ethoxylated with 9 moles of ethylene oxide - Orica Australia Pty Ltd) and held at a temperature of 50°C;
iv) the strips are observed for signs of cracking, any signs of cracking are regarded as a failure; and
v) the time to failure is when 50% of the strips show signs of cracking.

The ESCR test described above was developed to simulate the stresses that are imposed on the area of a tube that is crimped and sealed after the crimp and seal operation is carried out, this being an area of the crimped and sealed tube that is particularly susceptible to flex and ESCR failure. The need for this special test arose because 'standard' ESCR tests such as ASTM D-1693 are totally inadequate for determining the ESCR of polymers when moulded into flexible thin walled mouldings and subsequently crimped and sealed - a fact clearly illustrated by the comparison between ESCR results on Dupont 2020T and Dowlex 2517 polymers using a 'standard' ESCR test and the abovementioned test.

Generally, in order to select a polymer blend suitable for the manufacture of flexible thin-walled articles it is necessary for the polymer blend to have an ESCR, tested according to the above procedure, of greater than 10 hours. Preferably the ESCR of the polymer blend is greater than 100 hours, more preferably greater than 200 hours and most preferably greater than 360 hours. Where the thin-walled article is a tube or other container used for the packaging of a composition such as a moisturiser or a shampoo which may be quite aggressive to the thin walled article and result in a degradation of its properties over time, it is desirable to select a polymer blend having an ESCR sufficiently high such that the thin walled article formed from the blend is able to withstand the rigours of use despite any degradation of properties resulting from the aggressive nature of the materials contained within the thin-walled article. Where the thin-walled article is used for the packaging of a relatively inert material, a lower ESCR may be tolerated.

The ESCR test as hereinabove defined may be conducted using a variety of stress crack agents. The preferred stress crack agent is Teric N9, a 9-mole ethoxylate of nonylphenol ex Orica Australia Pty Ltd. Other ethoxylates of nonylphenol may also advantageously be used. Other stress crack agents may be used and will be selected based upon the desired end-use, for example mineral oils, cationic surfactants, solvents and other agents which will be apparent to those skilled in the art.

The ESCR test as described above is conducted under moulding conditions the same as or similar to those to be used in the manufacture of thin walled articles. For example, where it is intended to produce the thin walled article using a moulding incorporating melt flow oscillation techniques, it is advantageous to conduct the ESCR tests on panels produced from mouldings made by employing melt flow oscillation techniques. Similarly, the moulding conditions intended for use to mould the thin walled articles, such as injection speed, injection pressure, melt temperature, core and cavity temperature, etc. are advantageously used to produce mouldings for use in the ESCR test.

The suitability of a polymer or blend for the application of the present invention, as well as the potential beneficial effects thereof, may be determined by carrying out the ESCR test as described above, but preferably with the following additions and modifications:
- Prepare two sets of 6 or more strips for subjecting to the ESCR test
- After bending and stapling the two sets of strips, subject one set of strips to the proposed annealing treatment (eg. an elevated temperature of 50°C for 30 minutes, allow the strips to cool to 22°C) and maintained at 22°C for 2 hrs
- Insert the two sets of strips in the stress crack medium as prescribed by the ESCR test.

The potential benefit of the present invention may be assessed by comparing the ESCR and/or Gullwing tear resistance of the polymer when tested with and without being subjected to the annealing process when in the stressed state. The present invention is particularly applicable and useful for thin walled articles where the difference in time to failure, as measured by the ESCR test as herein described, between annealed and unannealed strips of the polymer blend used to manufacture the article is greater than 5 hrs, preferably greater than 10 hrs, more preferably greater than 20 hrs, even more preferably greater than 30 hrs, more preferably greater than 50 hrs, even more preferably greater than 100 hrs and most preferably greater than 350 hrs.

Alternatively, the suitability of a polymer or blend for the application of the present invention may be determined by comparing the Gullwing Tear Resistance (measured in the direction of the flow of the polymer) of annealed and unannealed strips cut from mouldings such as may be used in the ESCR test, such strips being of suitable dimensions for carrying out the test. Annealed strips preferably have tear resistance that is more than 5% greater than that of unannealed strips, preferably more than 10% greater, more preferably more than 15% greater and most preferably more than 20% greater. The Tear Resistance of an injection moulded flexible thin walled article is particularly relevant when the article is made of polymers that have a tendency to split or tear relatively easily, such as polypropylene. This tendency to tear or split is often exacerbated when the polymers are moulded into articles that are, by the nature of the moulding process, tool design and moulding conditions, highly orientated. The Gullwing Tear test is particularly useful for assessing the suitability of, amongst other polymers, polypropylene-based polymers and blends thereof (including those cited above) for the production of injection moulded flexible thin walled articles because such polymers and blends thereof may well pass the ESCR test but still be unsuitable for commercial injection moulded flexible thin walled articles because of poor tear resistance. As is noted above, annealing such articles by means of the present invention may improve their tear resistance to the point where the article develops commercial utility.

The benefit of the present invention is illustrated by the following example. A formulation consisting of 25% Profax SC973 (100 MFI PP ex Basell), 34% Engage 8401 (30 MFI mPE ex Dupont-Dow) and 41% WSG 189 (100 MFI LDPE ex Qenos) was moulded into 165mm long by 0.5mm thick cylindrical tubes under moulding conditions designed to introduce maximum stresses into the moulded tubes. The ESCR of both annealed and unannealed strips cut from tubes was assessed using the ESCR method described herein. It was found that over 60% of unannealed strips taken from unannealed tubes failed the ESCR test within 2 hrs, whereas no failures were noted in the strips taken from the tubes having been annealed by heating the stapled strips for 30 minutes at 50°C, cooling to 22°C and conditioning at 22°C for 2 hrs. Further, 94% of the unannealed strips, compared to only 22% of the annealed strips, had failed by 360 hrs. This illustrates that the present invention significantly improves the ESCR of injection moulded flexible thin walled articles, and enables the use of many polymer blends that may not have adequate ESCR when tested according to the method described herein and which are intended for use for the manufacture of commercially valuable flexible thin walled articles.

The benefits of the present invention are most noticeable in flexible thin-walled articles having a thin section less than 1mm in thickness and wherein the thin section is substantially continuous for greater than 50mm in the direction of flow of the molten polymer blend in the mould, preferably greater than 90mm in the direction of flow of the molten polymer blend in the mould and most preferably greater than 100mm in the direction of flow of the molten polymer blend in the mould.

Blends of isotactic polypropylene with ethylene propylene copolymers having 4 wt. % to 35 wt. % ethylene, both components having isotactic propylene sequences long enough to crystallize are described in WO 00/01766. Such blends may be suitable for the manufacture of flexible tubes and other containers that are subjected to heating by such methods as heat-filling with the product the container is required to contain and/or heat treating the filled container by methods such as retorting. Blends conforming to the above specification comprise 1 wt. % to 95 wt. % of the isotactic polypropylene and an ethylene propylene copolymer with greater than 65 wt. % propylene and preferably greater than 80 wt. % propylene.

Blends of various polypropylene polymers and ethylene, propylene or butene α-olefin polymers may also be particularly suitable for the manufacture of flexible tubes and other containers that are subjected to heating by such methods as heat-filling with the product the container is required to contain and/or heat treating the filled container by methods such as retorting. Blends conforming to the above specification comprise, in line with the invention, component (a) being at least one isotactic, syndiotactic or atactic polypropylene homopolymer or α-olefin copolymer, preferably one or more of a C2 to C20 α-olefin copolymer, more preferably one or more of a C2 to C8 α-olefin copolymer made with a variety of catalysts such as metallocene or similar catalysts, and component (b) at least one of an ethylene, propylene and/or butene copolymer, preferably a C2 to C20 α-olefin ethylene, propylene or butene copolymer, more preferably a C2 to C8 α-olefin ethylene copolymer made with a variety of catalysts such as metallocene or similar catalysts and featuring a super-random distribution of the copolymer within and amongst the molecular chains of the polymer. The blends consist of 1% to 99% of component (a) and 99% to 1% of component (b), preferably 30% to 99% of component (a) and 70% to 1% of component (b), even more preferably 45% to 99% of component (a) and 55% to 1% of component (b), yet more preferably 55% to 99% of component (a) and 45% to 1% of component (b), and most preferably 60% to 99% of component (a) and 40% to 1% of component (b).

As is noted in PCT/AU98/00255, AU 200020674 A1, AU 72146-99, Australian Innovation Patent No 2002200093 and Australian Innovation Patent 2002100211, blending at least one compatible agent with at least one polymer frequently has the effect of substantially improving the ESCR. Such incorporation of a compatible agent also frequently improves the Gullwing tear test of the blend. The at least one compatible agent is preferably a polymer and when blended with the at least one polymer results in blends having properties which, when used to mould flexible thin-walled articles such as flexible injection moulded tubes, are superior to the original constituents or the neat polymers. This phenomenon is advantageously used to formulate blends suitable for the injection moulding of the flexible thin walled articles of the invention.

A particular class of compatible agents have been found by the applicant to be particularly useful in blends for the manufacture of flexible thin-walled articles by injection moulding. Those are high melt flow compatible polymers. It has been found that blends including such compatible agents are particularly the process described above in relation to the first aspect of the invention, and may also be useful in processes that do not include the above described annealing of the article formed.

Therefore, according to a second aspect of the invention there is provided a process for the manufacture of flexible thin-walled articles comprising injection moulding a blend of (a) at least one polymer and (b) at least one high melt flow compatible polymer.

It will be appreciated that the following discussion of the blends according to the second aspect of the invention will be equally applicable to the processes of the first aspect of the invention.

The high melt flow compatible polymer will generally have an MFI of greater than 100, preferably greater than 200, more preferably greater than 300, and may have an MFI of greater than 500, still further greater than 1000 and yet further greater than 1,500. One or more of the polymer components of either or both (a) and (b) are advantageously produced with a metallocene or similar catalyst system.

In the polymer blend, component (a) is about 40 to about 99.9 weight percent of the blend based on the total weight of (a) and (b) and forms the continuous or co-continuous phase of the blend. The polymer blend is generally formed by mixing blend components (a) and (b) under high shear mixing conditions or other means capable of producing an intimate mix, such as in parallel or series reactors, each reactor producing one or more components of blend components a) and/or b). A unit such as a twin-screw extruder would be an example of a suitable piece of mixing equipment. Other means to achieve a well mixed blend will be apparent to those skilled in the art.

The polymer blend may be prepared by extrusion of some or all of the components of the polymer blend and the resulting extrusion chopped and used in the injection moulding process of the present invention. Alternatively, the polymer blend may be provided in its component form and subjected to mixing before and during the melting of the polymer blend in the present process.

The high melt flow compatible polymer may be selected from the group consisting of ethylene vinyl acetate; ethylene vinyl alcohol; plasticised polyvinyl acetate and polyvinyl alcohol; alkyl carboxyl substituted polyolefins; copolymers of anhydrides of organic acids; epoxy group containing copolymers; chlorinated polyethylene; ethylene-propylene-butylene etc. copolymers; ultra low density, very low density, low density, medium density and high density polyethylene and copolymers thereof; polypropylene, polybutylene and copolymers thereof; polyester ethers; polyether-esters (such as DuPont's Hytrel range); acrylonitrile-methacrylate copolymers; block copolymers having styrene end blocks; half esters; amino and alkoxysilane grafted polyethylenes; vinyl addition polymers; styrene-butadiene block copolymers; acid grafted polyolefins; vinyl pyrrolidine grafted polyolefins; block copolymers of dihydric monomers; propylene graft unsaturated esters; modified polyolefins comprising amide, epoxy, hydroxy or C2 - C6 acyloxy functional groups; other polymeric compatibilisers suitable for use with polyolefins; particles coated with any of the above; and mixtures thereof. In the above compatible polymers the functional groups are generally incorporated into the modified polyolefin as part of an unsaturated monomer which is either copolymerised with an olefin monomer or grafted onto a polyolefin to form the modified polyolefin. Included are ethyl and/or methyl acrylates of ethylene and/or propylene, and ethylene acrylic acid and methacrylic acid copolymer resins.

Also included are blends of compatible polymers, such as a neutralised ionomer such as a Surlyn (Dupont) and EEA and/or EMA and/or EMAA. For example, a low MFI partly neutralised ionomer such as Surlyn 9970 (MFI = 14) may be compounded with a high MFI EMA such as Nucrel 599 (Dupont) (MFI = 500) to achieve a compatible polymer blend with a higher MFI than is achievable with the Surlyn alone, while still being able to benefit from the beneficial properties of the Surlyn. Those skilled in the art will appreciate that the above example is but one of a very wide variety of combinations of compatible polymers that are covered by the present invention.

Alkyl carboxyl substituted polyolefins may include substituted polyolefins where the carboxyl groups are derived from acids, esters, anhydrides and salts thereof. Carboxylic salts include neutralised carboxylic acids and are often referred to as ionomers (eg. Surlyn). Typically acids, anhydrides and esters include methacrylic acid, acrylic acid, ethacrylic acid, glysidyl maleate, 2-hydroxyacrylate, diethyl maleate, maleic anhydride, maleic acid, esters of dicarboxylic acids, etc. Preferred examples include ethylenically unsaturated carboxylic acid copolymers such as polyethylene methacrylic acid and polyethylene acrylic acid and salts thereof. Copolymers of anhydrides of organic acids include copolymers of maleic anhydride as well as copolymers of cyclic anhydrides.

Poly-2-oxazoline compounds and fluoroelastomers are also suited for use as a high melt flow compatible agent. Incorporation of 1-40%, most preferably 2-20% of poly-2-oxazoline compounds is preferred. These compatible polymers improve the adhesion of the PE blend to various substrates, which may make them useful for printing or labelling. The compatibilizing polymer comprises an α-olefin copolymer substrate grafted with amounts of monovinylidene aromatic polymer. Preferably, the α-olefin copolymer substrate is a terpolymer of ethylene, propylene and a non-conjugated diolefin. Particularly useful as compatible agents and high MFI compatible agents are various aromatic/aliphatic olefin copolymers of which styrene-1,4-butadiene-butylene-styrene bock copolymers (SBBSA copolymers), styrene-butadiene-styrene copolymers (SBS copolymers) and styrene-ethylene-butylene-styrene copolymers (SEBS copolymers) are particularly useful examples for the production of flexible thin walled articles.

Many copolymers of ethylene are also useful as high melt flow compatible polymers in the process of the present invention. For example single site catalysed polymers such a metallocene catalysed polyethylene and ethylene.

The polymer blends preferably include (a) at least one polymer having an MFI of greater than 10, preferably greater than 20, more preferably greater than 30, even more preferably greater than 50, the polymer preferably being an ethylene or propylene or butene homo or α-olefin interpolymer and preferably produced with a metallocene or similar catalyst which will display narrow composition distribution, meaning that the fractional comonomer content from molecule to molecule will be similar; and, in line with the invention, (b) at least one high melt flow compatible polymer, preferably an ethylene, propylene or butene homo or α-olefin interpolymer having a melt flow rate of greater than 300 and preferably produced using a metallocene or similar catalyst. All references to metallocene catalysts shall include other catalysts (e.g. single-site and constrained geometry catalysts) capable of producing polymers having properties the same as or similar to metallocene-produced polymers (e.g. narrow or broad MWD, narrow composition distribution,). Such blends can optionally include additives well known to those skilled in the art, and may include amongst others, additives that reduce the water vapour and/or oxygen transmission rates of the polymers in which they are incorporated. For example, and as described in WO/02/074854, the addition of between 0.5% and 3% of a low MW hydrogenated aliphatic resin such as poly (dicyclopentadiene) may reduce the normalised moisture vapour transmission and sometimes the O₂ transmission rate of the blend and articles made therefrom.

Polyethylene, as used herein, can be a homopolymer or a copolymer and includes ethylene plastomers, VLDPE, LLDPE, LDPE, and HDPE. Ethylene plastomers, as used herein, refers generally to a class of ethylene based copolymers with density of less than about 0.915 g/cc (down to about 0.865 g/cc). Ethylene plastomers have an ethylene crystallinity between plastics (i.e. linear low density and very low density polyethylenes) and ethylene/α-olefin elastomers. VLDPE is very low density polyethylene, typically having a density in the range of from 0.90 to 0.915 g/cc. LLDPE is linear low density polyethylene, typically having a density in the range of from 0.915 to 0.930 g/cc. LDPE is low density polyethylene, typically having a density in the range of from 0.915 to 0.930 g/cc. HDPE is high density polyethylene, typically having a density in the range of from 0.930 to 0.970 g/cc.

Although PCT/AU98/00255 advises that "a wide variety of polypropylene polymers possessing a very wide range of MFIs (1-200+), densities and crystallinities will produce blends suitable for use in the process of the present invention", it does not describe any particular advantages to be derived from the incorporation of at least one compatible polymer of any nature, including polypropylene polymers, with high MFIs, and indeed gives no examples of compatible polymers with an MFI greater than 100. In the context of this patent application, a high MFI compatible polymer means one or more compatible polymers generally having an MFI of greater than 100.

The compatible polymer largely forms the disperse phase of the blends of the present invention. It has now been found that, surprisingly, the incorporation of at least one high melt flow compatible polymer in formulations for the manufacture of a flexible thin walled article frequently has a number of significant advantages relative to the use of the same compatible polymer(s) but with a low MFI. It has also been found that provided the molecular weight of the at least one compatible polymer doesn't fall below a value beyond which its ability to improve the ESCR and/or tear strength in the direction of the polymer flow of the moulded blend is negated, the incorporation of high MFI compatible polymers into the blend has a number of significant advantages relative to the incorporation of low MFI grades of the same compatible polymer. For example, the high melt flow compatible polymer frequently has the effect of increasing the shear sensitivity and overall MFI of the whole blend, thereby improving its flow properties. Also, because there is usually an inverse relationship between MFI and some physical properties of polymers, it is frequently found that polymer properties such as flex modulus and hardness decrease with increasing MFI. When it is desired, for example for reasons of cost, ESCR effectiveness, etc., to use as a particular compatible polymer, but the low MFI grades of that polymer (i.e. polymers with MFIs ≤100) have a flex modulus that is too high relative to the desired application and which results in mouldings and that are too stiff, the substitution of a high MFI chemically similar or identical compatible polymer for all or part of the compatible polymer with an MFI of ≤100 in a blend enables the production and use of blends with much higher MFI than were previously attainable while at the same time reducing the adverse impact on properties such as 'feel' and higher flex modulus that would normally be associated with lower MFI grades of the compatible polymer. Depending on the desired properties of the moulded article, the high melt flow compatible polymer can be used either as the sole compatible polymer in a blend or may be blended with other MFI compatible polymers, which may be either high or low MFI compatible polymers.

Without wishing to be bound by theory, it is believed that the interaction between the polymer and high melt flow compatible polymer forms regions within the moulded articles which can be regarded as "joints". These "joints" appear to absorb or disperse stresses in articles made from the polymer blend. The presence of these "joints" interspersed within the article appears to absorb or dissipate the stresses within the article which would otherwise result in decreased physical properties. It is believed that the benefits obtained from the use of at least one high melt flow compatible polymer are due primarily to their being more effectively dispersed in the at least one compatible agent relative to lower MFI versions of the same compatible agent and that they enable the formation of more and smaller disperse phase particles sizes relative to that attainable with low MFI versions of the same polymer. In general, the higher the MFI of the compatible polymer, the smaller the particle size that it can form, although there will be an MFI (and hence MW) beyond which reducing the MW further will not result in further reductions in high melt flow compatible polymer particle size. The smaller particle size of the disperse phase in turn results in an increase of the total surface area of a given weight percentage of the compatible polymer, thereby enabling a greater number of joints and areas of interaction between the polymer and the disperse phase (i.e. the compatible polymer) of the blend. The effect of reducing the particle size of a compatible polymer on the number of particles of the compatible polymer in the blend is illustrated by the fact that for a given weight % of a compatible polymer in a blend, halving the particle size (eg. by halving the particle radius) of the compatible polymer increases the number of compatible polymer particles by a factor of 8 and the total surface area of the compatible polymer by a factor of 2. Thus halving the radius of the particles of compatible polymer increases the number of stress-relieving 'joints' within the moulding by a factor of 8 and the surface area of the interface between the compatible polymer and the polymer by a factor of 2. Both these increases have the potential effect of improving moulding properties such as ESCR and tear strength.

Again without wishing to be bound by theory, we believe that the increase in particle numbers and surface area of the compatible polymer of the discontinuous phase is one of the key reasons for many of the property improvements (eg, ESCR, tear strength) of the invention. The improvements in ESCR etc. resulting from the incorporation of high MFI compatible polymers often enables the percentage of compatible polymer in a blend to be reduced while still attaining an acceptable ESCR etc. This may be advantageous, for example where it is desirable to reduce the amount of a polypropylene compatible agent in a blend in order to reduce the flex modulus of said blend. Alternatively, and using the same example, maintaining the weight % of the high melt flow compatible polypropylene results in significant increase in the number of disperse phase particles relative to a low MFI equivalent polypropylene which in turn increases the overall ESCR of the blend. This ESCR improvement in turn enables the use of higher MFI polymers, thereby increasing the blend's processing characteristics while maintaining acceptable ESCR performance.

For each type of compatible polymer there will be an upper limit on how high it's MFI (i.e. how low its molecular weight) can be before it starts to unacceptably degrade the performance of a particular blend for use in a particular application. This upper limit will vary, depending on the characteristics of the particular compatible polymer (e.g. homopolymer or copolymer PP, ionomer etc.), the properties of any other compatible polymers in the blend as well as the characteristics of the polymer(s) and the interaction between them as well as the end use of the moulded product (eg. what is intended to be packed into the product), and can be determined by experimentation. For some applications some degradation of some characteristics of a particular blend due to the incorporation of one or more high MFI compatible polymers relative to the same blend but with a low MFI version of the same compatible polymer may be acceptable in order to achieve the benefits of the improvement of other properties of the blend that result from their incorporation. Again, the limits on how high the MFI of the high melt flow compatible polymer can be as well as the level of incorporation that can achieved before the blend performance is degraded to an unacceptable level can be determined by experiment.

The high melt flow compatible polymer may be directly produced in a reactor using appropriate catalysts (including metallocenes or similar catalysts) and processing conditions. The high melt flow compatible polymer may also be prepared by 'cracking' lower MFI polymers of the same type by means of various peroxides or other molecular chain-cutting polymers known to those skilled in the art. For example, a 50 MFI polypropylene homopolymer or copolymer may be converted into a high MFI (e.g. a 300, 500, 1,000 or 1500 MFI) polypropylene homopolymer or copolymer by means of cracking it. The cracking required to produce a high melt flow compatible polymer of a particular MFI can be achieved prior to incorporation of the high melt flow compatible polymer into the polymer, thereby producing a high melt flow compatible polymer ready for incorporation into the blend. Alternatively, the high melt flow compatible polymer may be produced in situ in the blend by incorporating into and/or coating the compatible polymer with an appropriate amount and type of a cracking agent capable of cracking the polymer to the required MFI, adding the thus prepared compatible polymer/cracking agent combination to one or more of the other blend components and processing the resultant blend under conditions (usually a high enough temperature) sufficient to enable the cracking agent to reduce the MW (molecular weight) of the compatible polymer to a level that will result in the desired MFI of the compatible polymer. If this latter method of achieving the high melt flow compatible polymer is used, it is necessary to assess the impact, if any, of the cracking agent on the other blend components during processing (ie. to assess for any unintended cracking or cross-linking of the other blend components by the cracking agent), and if necessary to adjust the blend formulation to correct for the consequences of these effects on the overall properties of the blend. A further method of producing blends of the present invention containing a high melt flow compatible polymer as the disperse phase within a continuous or co-continuous phase of a polymer is to produce a reactor blend of the high melt flow compatible polymer and polymer. This may be achieved by a number of means that are well known to those skilled in the art. For example, the high melt flow compatible polymer and polymer may be produced in a single reactor in the presence of appropriate catalysts. Alternatively they may be produced in parallel or series in two or more reactors, or one polymerized component may be added in its finished state to a reactor in which the other component is being produced.

The high melt flow compatible polymer of the second aspect of the present invention is a compatible polymer or a mixture thereof wherein at least one compatible polymer generally has an MFI of greater 300, and potentially greater than 500, or greater than 1,000, or still further
greater than 1500. Unless otherwise stated, MFI is measured according to ASTM D 1238 (Condition 190°C/2.16 kg). Preferably the high melt flow compatible polymer of the present invention is a polypropylene homopolymer, a block or random co or terpolymer of polypropylene, or a mixture thereof, wherein the propylene-based polymer component has an MFI (as measured by ASTM D 1238 at 230°C, 2.16kg) of 100 dg/min or more, preferably an MFI of greater than 100, preferably greater than 200, more preferably greater than 300, and possibly greater than 1500. Preferably the propylene-based polymer component is an isotactic or syndiotactic polypropylene homopolymer or copolymer having a MFI falling within the ranges specified above. Preferably the propylene-based polymer component will have a MWD of from 1.8 to 4.0 and a narrow composition distribution that is characteristic of metallocene or similar catalysed propylene polymers. However, propylene-based polymers such as are cited in US 6,476,173, and which have MWDs up to 20 will often produce good results. Polymers such as are cited above are conveniently produced using a stereospecific metallocene catalyst system. Random ethylene/propylene/vinyl aromatic interpolymers such as ethylene/propylene/styrene interpolymers may also be used as the compatible and/or high melt flow compatible polymer in the present invention.

A wide variety of polypropylene-based high melt flow compatible polymers, particularly when blended with low molecular weight plastomers, substantially linear polyethylenes, metallocene long-chain branched polyethylenes and copolymers of the aforementioned ethylene polymers as the polymer, will produce blends suitable for use in the process of the present invention. Many monomers have been copolymerized with propylene to form copolymers of propylene for use as compatible polymers. Many high MFI grades of these copolymers are suitable as the polymer or compatible polymers for use in the present invention.

High MFI polypropylenes suitable as a high melt flow compatible polymer for use in the process of the present invention include isotactic, sydiotactic and atactic polypropylene and blends thereof of various MFIs, densities and crystallinities as would produce desired properties in products moulded by the process of the present invention. Polypropylenes particularly useful as the high melt flow compatible polymer include homopolymers or copolymers of propylene and one or more α-olefins selected from ethylene or linear or branched C4 to C20 α- olefins, preferably ethylene or C4 to C8 α-olefins, more preferably ethylene, 1-butene, 1-hexene, 4-methyl-1-pentene, 3-methyl-1-pentene, 3,5,5-trimethyl-1-hexene, and 1-octene, even more preferably ethylene or 1-butene or hexene or octene, and optionally, minor amounts of non-conjugated diolefins, preferably C6 -C20 diolefins. In one embodiment, the α-olefin can contain cyclic structures that are fully saturated such that the α-olefin monomer does not contain a cyclic moiety with any olefinic unsaturation or any aromatic structures. Preferred α-olefins are mono-olefins. These propylene copolymers with prescribed range of comonomer levels are preferably prepared by polymerization of the suitable olefins in the presence of supported or unsupported metallocene or similar catalyst systems.

When the propylene-based compatible polymer either consists of or contains one or more copolymers, such copolymers are preferably composed of propylene as a main monomer and an α-olefin other than propylene as the co-monomer. The content of the propylene is generally 70 mole percent or more, more preferably 80 mole % or more, even more preferably 90 mole % or more and most preferably 98 mole % or more. The polypropylene copolymer of the present invention preferably comprises a random crystallisable copolymer having a narrow compositional distribution such as can be produced by metallocene or the like catalysts.

High MFI polyethylene suitable as the high melt flow compatible polymer for use in the process of the present invention may include polyethylenes of various MFIs, densities and crystallinities as would produce desired properties in products moulded by the process of the present invention. Included are very low, low, medium and high density polyethylene. Particularly when blended with ethylene or propylene α-olefin copolymer low molecular weight plastomers, substantially linear ethylene or propylene α-olefin copolymers or metallocene branched ethylene or propylene α-olefin copolymer, a wide variety of polyethylene polymers possessing a very wide range of MFIs (100-1500+), densities and crystallinities will be high melt flow compatible polymers suitable for use in the process of the present invention.

High MFI ionomers and chemically related polymers such as EEA, EVA and EMA provide particular advantages as high melt flow compatible polymers when combined with olefins, particularly ethylene or propylene plastomers, substantially linear polyethylene or polypropylene, and/or branched polyethylenes or polypropylenes as the polymer. Ionomers are typically copolymers of ethylene and acrylic or methacrylic acids which have been neutralised with metal ions such as sodium, lithium or zinc. One group of ethylene copolymers, called ionomers, are exemplified by the commercial product Surlyn (manufactured by DuPont). Ionomers tend to behave similarly to cross linked polymers at ambient temperature, by being stiff and tough, yet they can be processed at elevated temperatures. Blends of olefins, particularly ethylene or propylene plastomers, substantially linear polyethylenes or polypropylenes, and/or branched polyethylenes or polypropylenes with one or more ionomers are particularly preferred, such blends sometimes providing polymer blends with increased barrier properties and improved optical properties relative to the olefins without the ionomer.

The blend composition of the present invention will comprise in the range of about 40 to about 99.9 weight percent of the polymer which forms the continuous phase or co-continuous phase of the blend when moulded and in the range of about 60 to about 0.1 % of a compatible polymer, of which all or part is a high melt flow compatible polymer. These are preferred ranges. The particular polymer component, the particular compatible polymer component, and the relative amounts of each used in the blend of this invention will depend on the requirements of the particular application for which the blend will be utilized, economics, and other process factors and can be determined by experimentation.

With respect to the physical process of producing the blend, sufficient mixing should take place to assure that a uniform blend, preferably with the compatible polymer being finely dispersed, will be produced prior to conversion into a finished product. Those skilled in the art will be able to determine the appropriate procedure for blending of the polymers to balance the need for intimate mixing of the component ingredients with the desire for process economy. A. further method of producing blends of the present invention containing high melt flow compatible polymers as the disperse phase within a continuous or co-continuous phase of a polymer is to produce a reactor blend of the high melt flow compatible polymer and polymer. This may be achieved by a number of means that are well known to those skilled in the art. For example, the compatible polymer and polymer may be produced in a single reactor in the presence of appropriate catalysts. Alternatively they may be produced in parallel or series in two or more reactors, or one polymerized component may be added in its finished state to a reactor in which the other component is being produced.

Some preferred properties of the final composition when moulded include high tensile strength, flexibility and tear strength. The extractables content for the compositions of the invention and mouldings therefrom is preferably less than or equal to 2.0 wt %, more preferably less than or equal to 1.6 wt %, most preferably less than or equal to 1.4 wt % as measured by ASTM D-5227.

Similar to the function of compatible agents as described in PCT/AU98/00255, the high melt flow compatible polymer of this aspect of the present invention is used in an amount at least sufficient to improve the environmental stress crack resistance and/or tear resistance, as measured by the Gullwing tear test, of the polymer blend. The high melt flow compatible polymer may also be used in amounts in excess of those required to compatibilise the polymer blend in order to improve the viscosity characteristics of said polymer blend so as to optimise the moulding characteristics of said polymer blend and/or general properties of the moulded product such as softness and flexibility. Typically, the high melt flow compatible polymer is used in an amount of from about 2 to about 40 weight percent of the polymer blend, although lower or higher amounts may be used in certain polymer blends. The optimum amount for a specific formulation will depend on the properties required and can be determined by experimentation. Further it has been found that inclusion of percentages of high melt flow compatible polymers that are greater than necessary for increasing the environmental stress crack resistance of the polymer blend will often also enable the improvement of the polymer blend properties such as tear and impact strength, barrier properties, chemical resistance, processing and product feel. For example, the incorporation of greater than necessary percentages of a polypropylene-based high melt flow compatible polymer to improve the environmental stress crack resistance of a polyethylene-based polymer blend to the desired level may improve the chemical resistance and general barrier properties, and reduce the water vapour and water transmission rate of the polymer blend compared to polymer blends containing the minimum amount of polypropylene-based high melt flow compatible polymer required to improve the environmental stress crack resistance only. The properties of such blends of the high melt flow compatible polymer of the present invention may further be modified by the selection of suitable grades of the high melt flow compatible polymer and/or the polymer components to achieve the desired final properties. For example, where it is desired to have a polymer blend containing a relatively high percentage of polypropylene-based polymers, blend properties such as the 'feel', 'softness', impact resistance (especially low-temperature impact resistance), elongation-to-break, tear resistance and/or retortability of such a blend may be substantially modified by utilising a relatively low percentage of low-flex-modulus polymers as the polyethylene-based components of the blend. Examples of suitable low-flex-modulus polyethylene-based polymers include low flex modulus plastomers such as DuPont-Dow Engage 8401 plastomer and some of Mitsui's Tafmer XR propylene/α-olefin copolymers. Further, it has been found that the inclusion of greater than necessary percentages of the high melt flow compatible polymer may enable the incorporation of greater percentages of other polymers than would otherwise be consistent with this invention. Thus, using the high melt flow compatible polymer in such quantities may enable the incorporation of greater-than-otherwise-possible amounts of such beneficial, essentially incompatible other polymers such as nylons and EVOH, with concomitant improvements in properties such as tear and impact strength, barrier properties, chemical resistance and product feel.

The high melt flow compatible polymer containing polymer blend may also incorporate a variety of other additives. Examples of additional additives include further polymers, slip agents, anti-tack agents, pigments, dyes, fillers, antioxidants, plasticisers, UV protection, viscosity modifying polymers, additives (some of which may themselves be polymers) capable of reacting with or absorbing deleterious chemicals such as oxygen and other mould release polymers and melt strength modifiers amongst others. Additionally, compatibilisers that improve various properties of the blends, such as weld line strength, compatibility between the polymer and high melt flow compatible polymer, disperse phase particle size reduction, ESCR, tear strength, etc., may be added to the blends. The abovementioned and other suitable additives may be added to one or more components of the polymer blend or the polymer blend as a whole prior to moulding in order to modify its properties to suit specific applications or to achieve specific effects in the end product. In cases where one or more of the additives is itself a polymer, for example in the case of some oxygen-scavenging systems, said polymer may be the polymer or compatible polymer of the polymer blend. Non-polymer additives may be compatible polymers of the polymer blend.

Polymers used as the polymer in blends with the high melt flow compatible polymer of the present invention include olefin homopolymers and copolymers, preferably ethylene or propylene or butene homopolymers
and copolymers with C3-C20 α or beta olefins and/or polyenes, preferably C3-C8 α or beta olefins, such polymers having densities ranging from very low to high density (density ranges between 0.85 and 0.97 g/cm3). Also suitable for use in the present invention are ethylene, propylene and butene copolymers with terminal vinyl groups and ethylene, propylene and butene copolymers containing greater than 50% ethylene, propylene or butene which are copolymerised with comonomers such as methyl acrylates, ethyl acrylates, acrylic acid, methacrylic acid and other polar comonomers, ionomers, styrene-ethylene/butene-styrene ABA copolymers, styrene, halo- or alkyl substituted styrenes or other vinylidene aromatic monomers and/or one or more hindered aliphatic or cycloaliphatic vinylidene monomers, tetrafluoroethylene, vinylbenzocyclobutane, and naphthenics (e.g., cyclopentene, cyclohexene and cyclooctene). These polymers may be made by a wide variety of methods including high and low pressure processes, using a wide variety of catalysts such as Ziegler-Natta and metallocenes, and have molecular structures ranging from linear to highly branched, thus included are LDPE, MDPE and HDPE. Particularly suitable for use in the present invention are plastomers, 'substantially linear' and branched polyethylenes or polypropylenes, copolymers of propylene and ethylene or one or more α-olefins, terpolymers of ethylene, propylene and one or more α-olefin (of which Montell's Catalloy polymers are an example) and polymers and copolymers of propylene manufactured using metallocene or similar catalysts and which are characterized by a super random distribution of the copolymers. Random propylene copolymers are suitable for the production of flexible thin-walled mouldings, particularly when improved optical clarity is required. Other polymers suitable for use in the present invention include polylactic acid polymers, other suitable biodegradable polymers and polyketones, ethylene carbon monoxide copolymers (ECO), ethylene/propylene carbon monoxide polymers (EPCO), linear alternating ECO copolymers such as those disclosed by U.S. Ser. No. 08/009,198, filed Jan. 22, 1993 and now abandoned, in the names of John G. Hefner and Brian W. S. Kolthammer, entitled "Improved Catalysts For The Preparation of Linear Carbon Monoxide/-Olefin Copolymers,", recycled polyethylene (e.g., post consumer recycled high density polyethylene recovered from waste bottles).

As exemplified in JP 07316356, JP 07316355 and JP 07330982, blends of crystalline PP in combination with ethylene/styrene/α-olefin elastomers may be suitable as a polymer for the production of flexible thin walled articles.

Also suitable for use as polymers are linear or branched isotactic polymers, particularly polypropylene and polybutene homopolymers or random copolymers which have a structure in which their tacticity varies within the range of between 25 and 60% of [mmmm] pentad concentration. This variation in tacticity is due to the statistic distribution of stereoscopic errors in the polymer chains. Such polymers are described in, amongst others, WO 01/27169 (P&G), WO/99/52955 (Rieger) and WO 99/52950 and (Rieger).

Also suitable for use in the present invention are linear or branched isotactic polymers having an arbitary or rather regular sequence of isotactic and atactic blocks within the polymer molecules, such as are described in WO/99/29749 (ExxonMobil). WO/99/2949 describes a branched polyolefin having crystalline sidechains and an amorphous backbone wherein at least 90 mole percent of the sidechains are isotactic or syndiotactic polypropylene and at least 80 mole percent of the backbone is atactic polypropylene.

Especially when polymers such as are described in the P&G, Rieger and ExxonMobil patents are incorporated in blends having have an MFI greater than 10, preferably greater than 20 more preferably greater than 30 and most preferably greater than 50, and still more preferably the polymers themselves have an MFI greater than 10, preferably greater than 20 more preferably greater than 30 and most preferably greater than 50, they may be used either as the sole polymer or as a compatible polymer or high melt flow compatible polymer and may have either narrow or broad molecular weight distribution. Polymers such as are described above are often particularly suited to the production of flexible thin walled articles relative to the equivalent polymers of higher tacticity because their relatively reduced tacticity results in polymers with reduced rigidity and increased flexibility and elasticity. If the polymer(s) is used as a compatible polymer or high melt flow compatible polymer, it is advantageous, though not necessary, that it is used in conjunction with at polymer that is made from the same monomer(s) as the compatible polymer or high melt flow compatible polymer because this results in greater compatibility/stability between the polymer(s) as well as allowing for easier recycling of injection moulded flexible thin walled articles produced from such blends. For example, if the polymer is a polypropylene homopolymer or copolymer with tacticity varying between 25 and 60% of [mmmm] pentad concentration, it can be blended with a polypropylene homopolymer or copolymer with a higher tacticity to produce a blend suitable for use in flexible thin walled articles. Alternatively, these polymers may be used in conjunction with other polymers to form blends that are suitable for use to manufacture flexible injection moulded thin walled articles. For example, these polymers may be blended with polyethylenes and copolymers of different types, including LDPE, MDPE and HDPE, which in turn may be manufactured using a variety of different manufacturing techniques, catalysts and copolymers such as are described in PCT/AU98/00255 and herein. Preferably, the polyethylene is manufactured using metallocene or similar catalysts.

In many blends suitable for the present invention, it is advantageous to incorporate at least two polymers into blends, with at least one polymer having a higher crystallinity, and preferably a higher MFI, than the at least one other polymer. It is preferable, though not essential, that the higher crystallinity polymer has a crystallinity that is at least 5% greater, and preferably 10% or more greater than the crystallinity of the at least one other polymer. The high crystallinity polymer may be made by a variety of methods using a variety of catalysts including metallocene, Ziegler Natta, constrained geometry catalysts, or may be produced by a free radical reaction process, and may be linear, substantially linear or branched in structure. In blends in which a high crystallinity polymer is incorporated with an at least one lower crystallinity polymer (which is preferably a metallocene polymer), better ESCR results are often obtained when the high crystallinity polymer has a broad MWD (molecular weight distribution). A broad MWD (i.e. multi modal) high crystallinity polymer can be produced by a variety of methods. These include:
1) Intimately blending two or more polymers having different MFIs in appropriate blending equipment;
2) Producing bi or multi modal polymers by means of 'tandem' reactors; and
3) Producing bi or multi modal polymers in a single reactor using appropriate catalysts.

As an example of a multi modal high crystallinity polymer, if a formulation for the continuous phase of a blend suitable for the production of flexible thin walled articles calls for a 40 MFI 0.92 density LDPE as the high crystallinity polymer in a 30 MFI 0.885 density metallocene polymer such as Engage 8401, processing and other property improvements may be obtained by substituting the 40 MFI LDPE with a 50:50 blend of a 20 MFI 0.92 and a 60 MFI 0,92 density LDPE. The properties and MFI of the blend of the two high crystallinity polymers in the polymer can be further varied by varying the ratio between the 20 MFI and 60 MFI, thus enabling a person skilled in the art to vary the properties of the blend according to desire. Relatively minor differences in density between the two high crystallinity polymer components are generally not critical to the performance of the blend, so in the above example, the 20 MFI component may have a density of 0.923 and the 60 MFI component a density of 0.919. The acceptability, for a particular end use, of particular density and MFI differences such as are illustrated in the above example can be determined by experimentation.

We have found that plastomers, substantially linear polyethylenes, metallocene branched polyethylenes and copolymers of the aforementioned ethylene polymers, propylene α-olefm interpolymers and metallocene propylene polymers and interpolymers are preferred polymers for use in the present invention for the production of thin-walled products, and especially for the production of flexible thin walled articles . A key characteristic of plastomers, substantially linear polyethylenes, metallocene branched polyethylenes and copolymers of the aforementioned ethylene polymers, propylene α-olefin interpolymers and metallocene propylene polymers and interpolymers is their composition distribution ie. the uniformity of distribution of comonomer within and among the molecules of the polymer. Plastomers, substantially linear polyethylenes, metallocene branched polyethylenes and copolymers of the aforementioned ethylene polymers, propylene α-olefin interpolymers and metallocene propylene polymers and interpolymers are generally made using catalysts which are known to incorporate comonomer very evenly among and along the polymer molecules they produce. Thus most molecules of a particular plastomer, substantially linear polyethylenes, metallocene branched polyethylenes and copolymers of the aforementioned ethylene polymers, propylene α-olefin interpolymers and metallocene propylene polymers and interpolymers will have roughly the same comonomer content, and within each molecule the comonomer will be super-randomly distributed. Another advantage of such catalysts is that the degree of molecular branching within and between the molecules of the polymers produced by them is more uniform than is obtained using conventional catalysts. For example, conventional Ziegler-Natta catalysts generally yield copolymers having a considerably broader composition distribution - and in the case of copolymers the comonomer distribution in polymers thus produced will vary widely among the polymer molecules, and will also be less randomly distributed within a given molecule. Also, the degree of long chain branching is more consistent between molecules produced by metallocene or similar catalysts than are produced by Z-N or similar catalysts.

Plastomers, substantially linear polyethylenes, metallocene branched polyethylenes and copolymers of the aforementioned ethylene polymers, propylene α-olefin interpolymers and metallocene propylene polymers and interpolymers are preferred for use in the present invention for the production of thin-walled products, and especially for the production of flexible tubes. These polymers may advantageously have a molecular weight distribution in a ratio Mw/Mn range of 1.5-30, preferably in the range of 1.8-10 and more preferably in the range 2-4. Generally, plastomer, substantially linear or branched ethylene or propylene polymers comprise ethylene or propylene homopolymers and interpolymers of ethylene and/or propylene, with at least one C3-C20 α-olefin copolymer being especially preferred. The term "interpolymer" is used herein to indicate a copolymer or a ter polymer or the like. That is, at least one other comonomer is copolymerised with ethylene or propylene to make the interpolymer α-olefins. Generally, the α-olefins suitable for copolymerisation with ethylene or propylene to form plastomers contain in the range of about 2 to about 20 carbon atoms, preferably in the range of about 3-16 carbons, most preferably in the range of about 3-8 carbon atoms. Illustrative non-limiting examples of such preferred α olefins are propylene, 1-butene, 1-pentene, 4-methyl-1-pentene, 1-hexene, 1-octene, and 1-dodecene and the like. Polyene comonomers suitable for the copolymerisation with ethylene or propylene to form plastomers suitable for the present invention have, in the main, about 3 to 20 carbon atoms, preferably in the range of about 4 to about 20 carbon atoms, most preferably in the range of about 4 to about 15 carbon atoms. In one embodiment the polyene is a diene that has in the range of about 3 to about 20 carbon atoms, and may be a straight chained, branched chained or cyclic hydrocarbon diene. Preferably the diene is a non-conjugated diene. Non-limiting examples of ethylene or propylene/α-olefin co-polymers suitable for the production of flexible thin walled mouldings include ethylene/propylene, propylene/ethylene, ethylene or propylene/butene-1, ethylene or propylene/hexene-1, ethylene or propylene/octene-1, substantially random ethylene/propylene/vinyl aromatic interpolymers such as ethylene/propylene/styrene interpolymers, ethylene or propylene/styrene, halo- or alkyl substituted styrene copolymers. Non-limiting examples of terpolymer plastomers suitable for the present invention include ethylene or propylene/propylene/1,4 hexadiene and ethylene or propylene/octene-1/1,4-hexadiene.

When the polymer is a plastomer, substantially linear or branched polymer in which propylene or butene constitutes over 50% of the polymer, the MFI of the α-olefin may be higher than is generally acceptable when ethylene α-olefins constitute the polymer, due to propylene and butene α-olefins generally possessing better inherent ESCR properties at the same MFI compared to most ethylene α-olefins . Thus, many propylene and butene α-olefins, particularly those prepared by metallocene or similar catalysts, can have MFIs up to and greater than 200 and still produce acceptable flexible thin walled articles with good ESCR when used as the polymer. The optimum MFI for a particular propylene or butene α-olefin polymer can be determined by experimentation by one skilled in the art, but will preferably be >30, more preferably >50, and generally >100 and possibly >150. α-olefins suitable for copolymerisation with propylene or butene to produce propylene or butene α-olefins suitable for the present invention include α-olefins in the range of about 2 to about 20 carbon atoms, preferably in the range of about 3-16 carbons, most preferably in the range of about 2-8 carbon atoms. Illustrative non-limiting examples of such α-olefins are ethylene, propylene, 1-butene, 1-pentene, 4-methyl-1-pentene, 1-hexene, 1-octene, and 1-dodecene and the like. Polyene comonomers suitable for the copolymerisation with propylene or butene to form propylene or butene copolymers suitable for the present invention have, in the main, about 3 to 20 carbon atoms, preferably in the range of about 4 to about 20 carbon atoms, most preferably in the range of about 4 to about 15 carbon atoms. In one embodiment the polyene is a diene that has in the range of about 3 to about 20 carbon atoms, and may be a straight chained, branched chained or cyclic hydrocarbon diene. Preferably the diene is a non-conjugated diene. Non-limiting examples of propylene or butene /α-olefin plastomers suitable for the present invention include propylene or butene/butene-1, propylene or butene/hexene-1, propylene or butene/octene-1 and propylene or butene /ethylene copolymers. Non-limiting examples of terpolymer propylene or butene plastomers suitable for the present invention include ethylene/propylene or butene/1,4 hexadiene and propylene or butene/octene-1/1,4-hexadiene. Copolymers of propylene or butene with other .α.-olefins having 2 to 8 carbon atoms that are particularly useful for the present invention are copolymers comprising propylene or butene and ethylene as indispensable components (monomer units) as well as copolymers of propylene or butene with ethylene and at least one α.-olefin having 4 to 8 carbon atoms usable herein include, for example, 1-butene, 3-methyl-1-butene, 1-pentene, 4-methyl-1-pentene, 1-hexene, and 1-octene. Further, the copolymer may contain as a comonomer 0.5 to 10% by weight of a nonconjugated diene, such as 1,4-hexadiene, 5-methyl-1,5-hexadiene, 1,4-octadiene, cyclohexadiene, cyclooctadiene, dicyclopentadiene, 5-ethylidene-2-norbornene, 5-butylidene-2-norbornene, or 2-isopropenyl-5-norbornene. Preferably these copolymers are prepared using metallocene or similar catalysts. The percentages of ethylene and/or other α-olefins copolymerised with propylene or butene to form polymers suitable for the present invention can be varied widely, depending on the desired properties of the mouldings made from blends of these materials. In general, the higher the percentage of ethylene and/or α-olefin copolymer polymerised with the propylene or butene, the lower the flex modulus of the resultant polymer and so the more flexible the mouldings made from them will be in which said polymers constitute the polymer of the blend.

US6355736 describes a propylene block copolymer composition comprising (A) a propylene-α-olefin random copolymer with a propylene content of 99.4 to 99.9 mol % and (B) a propylene-α-olefin random copolymer with a propylene content of 35 to 60 mol %. It further describes propylene block copolymer compositions wherein the content of the propylene-α-olefin random copolymer (B) is from 22 to 40% by weight, based on the weight of the propylene block copolymer ) composition. Such propylene block copolymers are suited for use as the polymer component and/or the high melt flow compatible polymer in the present invention.

US6458901 describes propylene copolymers suitable for use as the polymer component and/or the high melt flow compatible polymer suitable for use in the present invention. The propylene copolymers described comprise propylene, at least one olefin selected from the group consisting of olefins having 2 to 20 carbon atoms except propylene, and a cyclic olefin, and are characterized in that the total number of carbon atoms of the monomers except the cyclic olefin is at least 7. The incorporation of cyclic olefins into polymers consisting of propylene, at least one olefin ) selected from the group consisting of olefins having 2 to 20 carbon atoms except propylene results in the improvement of the heat resistance of the resultant polymer. The propylene copolymer preferably contains 0.01 to 20% by mole, more preferably 0.05 to 15% by mole, particularly preferably 0.1 to 10% by mole, most preferably 0.15 to 5% by mole, of the cyclic olefin. When the propylene copolymer of the present invention comprises ethylene (the olefin having two carbon atoms), the content of ethylene is preferably 80% by mole or less, more preferably 70% by mole or less, particularly preferably 60% by mole or less, most preferably 50% by mole or less, from the viewpoint of the improvement of flexibility of the thermoplastic resin composition.

) The short chain branch distribution index (SCBDI) is defined as the weight percent of molecules having a comonomer content within 15% of the median total molar comonomer content. The SCBDI of the propylene polymers suitable for the present invention is preferably greater than about 30%, and especially greater than about 50%, with figures of 70% or more being achieveable.

Without wishing to be bound by theory, we believe that the interfacial tension between two immiscible polymers decreases with decreasing molecular weight, so that as the MFI of the disperse phase increases so does the compatability between the polymers until they become miscible. We further believe that the degradation of the polymer blend properties that may occur if the MFI of the disperse phase is increased above a certain level is due at least in part to the disperse phase becoming miscible in the continuous phase. Elastic substantially linear, plastomer or branched ethylene or propylene α-olefin polymers can be made with broader molecular weight distributions by means of the appropriate selection of catalysts for the polymerisation process as described in US 5,278,272 and WO/02/074817. Broader MWD material exhibits a higher shear rate or shear stress dependency. In other words, generally the broader the MWD, the higher the effective MFI at high shear, and hence the better the processing characteristics. However, as observed in WO/02/074817, which describes the production of easier processing olefin polymers by producing essentially two or more polymers with roughly the same SCBDI but differing MWs (i.e. producing a high MW copolymer (M_{wH}) and a low MW copolymer (M_{wL}), it has been observed that such polymers with a M_{wH}/ M_{wL} greater than 60 may display some deteriorated physical characteristics relative to polymers with M_{wH}/ M_{wL} less than 60, and in general, M_{wH}/ M_{wL} less than 60 are preferred. The preferred M_{wH}/ M_{wL} range is 1.5 to 60, more preferably 1.5 to 40, yet more preferably 1.5 to 15. In some embodiments, the preferred M_{wH}/ M_{wL} is between 3 and 15. Broad molecular weight 'substantially linear olefin polymers', plastomers and metallocene branched polyethylenes and polypropylenes characterised by a high I₁₀/I₂ MFI ratio particularly suited to the production of tubes by the process of the present invention.

High I₁₀/I₂ polymers suitable for the present invention may be produced by a variety of methods. These include:
1) intimately blending two or more polymers having different molecular weights in appropriate blending equipment;
2) producing bi or multi modal polymers with high I₁₀/I₂ by means of 'tandem' reactors; and
3) producing bi or multi modal polymers with high I₁₀/I₂ in a single reactor using appropriate catalysts.

The catalysts used to produce bi or multi modal polymers with high I₁₀/I₂ may be selected to produce:
1) broad molecular weight distribution polymers (eg. polyethylene copolymers with molecular weight distribution in the 3-30 range such as are described in US patent 5,281,679); or
2) effectively two or more polymers, each having either a narrow or broad molecular weight distribution as desired. US 5,539,076 describes a method of manufacturing bi or multi modal polyethylene polymers with densities between 0.89 and 0.97 in a single reactor.

Examples of blends utilising the benefits of the addition of a high melt flow compatible polymer into the polymer are clearly illustrated by the following examples:
1) A 25:37.5:37.5 blend of SC973:Engage 8401:WSM 168 was injection moulded into tubes and the ESCR tested. SC973 is the compatible polymer in this formulation, and is a 100 MFI PP obtained from Basell. This formulation had a ±30% ESCR failure rate after 360 hours.
2) A 25:37.5:37.5 blend of Atofina 3960:Engage 8401:WSM 168 was injection moulded into tubes and the ESCR tested. Atofina 3960 is the compatible polymer in this formulation, and is a 350 MFI PP obtained from Atofina. This formulation showed a 0% ESCR failure rate after 360 hrs as well as significantly improved clarity relative to the comparative formula.

The only difference between formulations 1) and 2) is the substitution of the high melt flow compatible polymer approximately chemical equivalent of the compatible polymer for the compatible polymer, with the key difference between them being the much higher MFI of the high melt flow compatible polymer relative to the compatible polymer. The significant improvement in ESCR performance is due to the much higher MFI (i.e. much lower MW) of the high melt flow compatible polymer relative to the compatible polymer.

Examples of blends according to the second aspect of the invention will now be described. It will be understood that the percentages of the various types of blend components illustrated in these example may be varied depending on the desired properties of the mouldings produced therefrom, and that the range of percentages of the types of blend components that will produce acceptable mouldings may be determined by experimentation. :

### Example 1

30% Engage 8401, a 0.885 density, 30 MFI metallocene polyethylene from Dupont Dow
45% WSM 168, a 0.919 density, 63 MFI LDPE from Qenos
25% of Fina 3960, a 350 MFI PP homopolymer from Atofina.

This example illustrates the incorporation of a single high melt flow compatible propylene polymer into a blend of an mPE and an high crystallinity LDPE suitable for the manufacture of flexible thin walled articles.

### Example 2

45% Engage 8401, a 0.885 density, 30 MFI metallocene polyethylene from Dupont Dow
45% WSM 168, a 0.919 density, 63 MFI LDPE from Qenos
10% of a 1000 MFI PP homopolymer
10% SC973, a 100 MFI PP copolymer from Basell

This example illustrates the incorporation of a combination of a high melt flow compatible propylene polymer and a low MFI propylene compatible polymer into an mPE/LDPE blend suitable for the manufacture of flexible thin walled articles.

### Example 3

30% Engage 8401, a 0.885 density, 30 MFI metallocene polyethylene from Dupont Dow
15% WSM 168, a 0.919 density, 63 MFI LDPE from Qenos
15% WRM 124, a 0.920 density 22 MFI LDPE from Qenos
40% of a 1500 MFI PP homopolymer

This example illustrates the incorporation of a very high MFI compatible propylene polymer into a blend of an mPE, a relatively low (22) MFI LDPE compatible polymer and a relatively high (63) MFI LDPE suitable for the manufacture of flexible thin walled articles.

### Example 4

30% Engage 8401, a 0.885 density, 30 MFI metallocene polyethylene from Dupont Dow
30% WSM 168, a 0.919 density, 63 MFI LDPE from Qenos
20% of a 1000 MFI PP homopolymer
20% Catalloy KS-084P, a 30 MFI propylene terpolymer from Basell

This example illustrates the incorporation of a high melt flow compatible propylene polymer in combination with a low MFI, low flex modulus propylene terpolymer into a blend suitable for the manufacture of flexible thin walled articles.

### Example 6

30% Engage 8407, a 0.87 density, 30 MFI metallocene polyethylene from Dupont Dow
30% WSM 168, a 0.919 density, 63 MFI LDPE from Qenos
20% of a Nucrel 599, a 500 MFI EMA from Dupont
20% Surlyn 9970, a 14 MFI ionomer from Dupont.

This example illustrates the incorporation of a high MFI non-propylene compatible polymer in combination with a low MFI ionomer into a blend suitable for the manufacture of flexible thin walled articles. In this type of formulation the high MFI non-propylene compatible polymer is used at least in part to increase the MFI of the low MFI compatible polymer, said low MFI compatible polymer having been found to be particularly useful when utilised in compositions for the manufacture of flexible thin walled articles but which, when used as the sole compatible polymer in a composition, has an MFI that is sufficiently low to significantly reduce the practical utility of the composition.

### Example 7

70% propylene/butene copolymer with a butene content of 15%, an MFI of 50 and a MWD of <4 and made by a metallocene/single site catalyst.
30% Exact 4038, a 125 MFI 0.885 density ethylene/butene copolymer from ExxonMobil.

This example illustrates the incorporation of a high MFI mPE compatible polymer into a propylene/α-olefin copolymer, and which is suitable for the manufacture of thin-walled flexible articles.

### Example 8

70% propylene/octene copolymer with an octane content of 20%, an MFI of 30 and a MWD of <4 and made by a metallocene/single site catalyst.
30% of Fina 3960, a 350 MFI PP homopolymer from Atofina.

This example illustrates the incorporation of a high MFI PP compatible polymer into a propylene/octene α-olefin copolymer, and which is suitable for the manufacture of thin-walled flexible articles.

### Example 9

70% propylene/ethylene substantially linear copolymer with an ethylene content of 25%, an MFI of 50 and a MWD of <4 and made by metallocene/single site catalysts.
30% of Fina 3960, a 350 MFI PP homopolymer from Atofina.

This example illustrates the incorporation of a high MFI PP compatible polymer into a substantially linear propylene/ethylene α-olefin copolymer, and which is suitable for the manufacture of thin-walled flexible articles.

### Example 10

80% propylene/butene copolymer plastomer with an butene content of 30%, an MFI of 70 and a MWD of <4 and made by a metallocene/single site catalyst.
10% of a 50 MFI isotactic or syndiotactic PP homopolymer made using a metallocene/single site catalyst
10% of Fina 3960, a 350 MFI PP homopolymer from Atofina.

This example illustrates the incorporation of a high MFI PP and a low MFI PP compatible polymer into a propylene/butene α-olefin copolymer plastomer, and which is suitable for the manufacture of thin-walled flexible articles.

### Example 11

35% Engage 8401, a 0.885 density, 30 MFI metallocene polyethylene from Dupont Dow
22.55% WSM 168, a 0.919 density, 63 MFI LDPE from Qenos
22.5% WRM 124, a 0.92 density 22 MFI LDPE from Qenos
20% of a 750 MFI PP copolymer

This example illustrates the incorporation of a relatively high (63) MFI LDPE and a relatively low (22) MFI LDPE as components of the polymer in combination with a high MFI PP copolymer compatible polymer.

### Example 12

40% Engage 8407, a 0.87 density, 30 MFI metallocene polyethylene from Dupont Dow
22.55% WSM 168, a 0.919 density, 63 MFI LDPE from Qenos
22.5% WRM 124, a 0.92 density 22 MFI LDPE from Qenos
15% of a 1000 MFI PP homopolymer

This example illustrates the incorporation of a relatively high (63) MFI LDPE and a relatively low (22) MFI LDPE as components of the polymer in combination with a high MFI PP compatible polymer.

### Example 13

90% propylene/butene copolymer with an butene content of 30%, an MFI of 70 and a MWD of <4 and made by a metallocene/single site catalyst.
10% of a 500 MFI polyethylene or ethylene α-olefin copolymer made with a metallocene catalyst.

This example illustrates the incorporation of a high MFI polyethylene or ethylene α-olefin copolymer as the compatible polymer in combination with a propylene/butene α-olefin copolymer, The α-olefin percentage in the copolymer may be varied from 0.5% to 49% depending on requirements of the end use.

### Example 14

90% propylene/butene copolymer with a butene content of 30%, an MFI of 150 and a MWD of >4 and made by a metallocene/single site catalyst.
10% of a 500 MFI polyethylene, preferably made by a metallocene/single site catalyst.

This example illustrates the incorporation of a high MFI polyethylene as the compatible polymer in combination with a high MFI polypropylene compatible polymer.

Further to the above description, developments in the production of highly-branched polyolefins have enabled the production of star, comb, nanogel and other similar polymers.

These polymers feature a plurality of polyolefin arms linked to a polymeric backbone to provide a highly branched structure in which the properties of the highly branched structure can be conveniently tailored to the application for which the polymer is used. The choice of specific reactive polymeric backbone and/or its manner of preparation controls the branched structure as to comb, star, nanogel or structural combinations thereof. That allows for the preparation of polymers having relatively low viscosities compared to their linear counterparts at the same absolute molecular weight. These polymer types and blends made therefrom may be particularly suitable for the production of injection moulded flexible thin walled mouldings. The rheological behaviour of these polymers with controlled branching shows surprising and useful features. These polymers frequently have a zero-shear viscosity that is larger than a linear polymer of the same molecular weight. They show a rapid drop in viscosity with shear rate (large degree of shear thinning) and a plateau modulus that is at least two times lower than that of prior art linear and branched polymers. This latter characteristic is especially surprising, since ethylene polymers of various types exhibit essentially the same plateau modulus. This was thought to be intrinsic to the monomer type and not dependent on polymer architecture. The lower plateau modulus means that the comb and similar polymers are much less entangled than the linears, thus giving them such low viscosity for their molecular weight. The utility of these properties of these polymers is that they have a very low viscosity for their molecular weights under melt processing conditions and so will process much more easily than the prior art polymers. Even when added in relatively small quantities to conventional blends suitable for injection moulded flexible thin walled mouldings, they can significantly improve blend processability. US 6,355,757 and US 6,084,030 amongst other patents describe the production of polymers such as are described above.

The copolymers of the above and similar inventions have utility in blends suitable for the production of injection moulded flexible thin walled mouldings, those blends comprising the branched copolymer of the inventions at a very wide range (eg. 0.1-99.9% weight percent), but most often between 1-5%. Depending on the properties of a specific highly-branched polymer of the above inventions and the desired properties of a particular formulation, said polymer may be used as a component of the at least one polymer or at least one compatible polymer part of the composition of the present invention. Depending on their properties they may also be regarded as additives rather than components of the polymer portion of the present invention.

Recent catalyst and process developments have enabled the production of a variety of polypropylene homo and copolymers possessing properties that make them particularly useful for the production of injection moulded flexible thin walled articles. Amongst these useful polymers are elastomeric PP homo and copolymers polymers produced by altering the tacticity of the polymer by various means as well as the ability to produce low flex modulus PP α-olefin copolymers with relatively low percentages of α-olefin copolymers.

As examples of one of these recent developments are linear or branched isotactic polymers, particularly polypropylene and polybutene homopolymers or random copolymers which have a structure in which their tacticity varies within the range of between 25 and 60% of [mmmm] pentad concentration. This variation in tacticity is due to the statistic distribution of stereoscopic errors in the polymer chains. Such polymers are described in, amongst others, WO 01/27169 (P&G), WO 99/52955 (Rieger) and WO 99/52950 (Rieger). Similarly, propylene/ethylene copolymers of the types described in US 6525157 (ExxonMobil) are suitable for use in injection moulded flexible thin walled mouldings. It is worth noting that propylene α-olefins in which the number of Cs in the α-olefin is >4 have particular utility for packaging requiring improved cold creep resistance relative to propylene α-olefins in which the number of Cs in the α-olefin is ≤4.

Also suitable for use in the manufacture of flexible thin walled mouldings are linear or branched isotactic polymers having an arbitrary or rather regular sequence of isotactic and atactic blocks within the polymer molecules, such as are described in WO/99/29749 (ExxonMobil). WO 99/2949 describes a branched polyolefin having crystalline side-chains and an amorphous backbone wherein at least 90 mole percent of the side-chains are isotactic or syndiotactic polypropylene and at least 80 mole percent of the backbone is atactic polypropylene. They may have particular utility in blends as at least one compatible polymers in blends in which the at least one polymer is a crystalline or semi-crystalline PP. This will be particularly the case when the polymer(s) in question has a relatively low flex modulus as it acts to reduce the flex modulus of the blend with a crystalline or semi-crystalline PP at least one polymer, and increasing the tear resistance, flex modulus and impact resistance of the blend.

Polymers with characteristics such as are described in the abovementioned P&G, Rieger and ExxonMobil patents may be used as the at least one polymer or the at least one compatible polymer in blends and may have either narrow or broad molecular weight distribution. Polymers such as are described above are often particularly suited to the production of flexible thin walled articles relative to the equivalent polymers of higher tacticity because their relatively reduced tacticity results in polymers with reduced rigidity and increased flexibility and elasticity. If the polymer(s) is used as an at least one polymer it is advantageous - though not necessary - that it is used in conjunction with at at least one polymer that is made from the same monomer(s) as the at least one compatible polymer because this results in greater compatibility/stability between the polymer(s) as well as allowing for easier recycling of injection moulded flexible thin walled mouldings produced from such blends. For example, if the polymer is a polypropylene homopolymer or copolymer with tacticity varying between 25 and 60% of [mmmm] pentad concentration, it can be blended with a polypropylene homopolymer or copolymer with a higher tacticity to produce a blend suitable for use in flexible thin walled articles. Alternatively, these polymers may be used in conjunction with other polymers to form blends that are suitable for use to manufacture injection moulded flexible thin walled mouldings. For example, these polymers may be blended with polyethylenes and copolymers of different types, including LDPE, MDPE and HDPE, which in turn may be manufactured using a variety of different manufacturing techniques, catalysts and copolymers such as are described in the '255 patent.

Recent developments in polypropylene polymerisation technology have application for injection moulded flexible thin walled mouldings. One such development is the ability to produce very flexible, soft and elastic polypropylene polymers with minor percentage of ethylene copolymer and essentially no diene. These polymers have limited crystallinity due to adjacent isotactic propylene units and have a relatively low melting point. They are generally devoid of any substantial intermolecular heterogeneity in tacticity and comonomer composition, and are substantially free of diene. They are also devoid of any substantial heterogeneity in intramolecular composition distribution. The ethylene copolymer includes lower limit of 5% by weight ethylene-derived units to an upper limit of 25% by weight ethylene-derived units. Within these ranges, these copolymers are mildly crystalline as measured by differential scanning calorimetry (DSC), and are exceptionally soft, while still retaining substantial tensile strength and elasticity. Such polymers are described in US 6,525,157.

Recent developments have resulted in the synthesis of partially atactic, partially isotactic polypropylene polymers which have elastomeric properties. It is believed that in these components each molecule consists of portions which are isotactic, and therefore crystallisable, while the other portions of the same polypropylene molecule are atactic and therefore amorphous. Such polymers are be suitable for injection moulded flexible thin walled mouldings, either as the at least one polymer or the at least one compatible polymer in blends in combination with other polymers, such as polyethylenes, polypropylenes and/or α-olefin copolymers thereof. Examples of these propylene homopolymers containing different levels of isotacticity in different portions of the molecule are described by in, amongst others, U.S. Patent 5,594.080, in Journal American Chemical Society (1995), Vol. 117, page 11586, and in the Journal American Chemical Society (1997), Vol. 119, page 3635.

When the at least one polymer of a blend is a linear, substantially linear or branched polymer in which propylene or butene constitutes over 50% of the polymer, the MFI of the at least one polymer homo or α-olefin copolymer may be higher than is generally acceptable when ethylene α-olefins constitute the at least one polymer due to propylene and butene homo or α-olefins generally possessing better inherent ESCR properties at the same MFI compared to most ethylene α-olefins. Thus some propylene and butene homo or α-olefin copolymers, particularly those prepared by metallocene or similar catalysts, may have MFIs up to and greater than 150 and still produce acceptable injection moulded flexible thin walled mouldings with good ESCR when used as the at least one polymer. The optimum MFI for a particular propylene or butene homo or α-olefin copolymer at least one polymer can be determined by experimentation, but will preferably be >30, more preferably >50 and, depending on the characteristics of the particular polypropylene or polybutene homo or α-olefin copolymer, may be even more preferably >100 and most preferably >150, α-olefins suitable for copolymerisation with propylene or butene to produce propylene or butene α-olefins suitable for injection moulded flexible thin walled mouldings include α-olefins in the range of about 2 to about 20 carbon atoms, preferably in the range of about 2-16 carbons, most preferably in the range of about 2-8 carbon atoms. Further, the copolymer may contain as a comonomer 0.5 to 10% by weight of a nonconjugated diene, such as 1,4-hexadiene, 5-methyl-1,5-hexadiene, 1,4-octadiene, cyclohexadiene, cyclooctadiene, dicyclopentadiene, 5-ethylidene-2-norbornene, 5-butylidene-2-norbornene, or 2-isopropenyl-5-norbomene. Preferably these copolymers are prepared using metallocene or similar catalysts. The percentages of ethylene and/or other α-olefins copolymerised with propylene or butene to form polymers suitable for injection moulded flexible thin walled mouldings can be varied widely, depending on the desired properties of the mouldings made from blends of these materials. In general, the higher the percentage of ethylene and/or other α-olefin copolymer polymerised with the propylene or butene, the lower the flex modulus of the resultant polymer and so the more flexible the mouldings made from them will be in which said polymers constitute the at least one polymer of the blend.

Blends designed for recoverability and which contain a dispersed phase of a greater crystallinity and a continuous phase of lesser crystallinity such as are described below are suitable for the production of injection moulded flexible thin walled mouldings. The sizes of the individual domains of the dispersed phase in these blends are preferably very small. The components of the blend are also compatible to the extent that no compatibiliser needs to be added to attain and retain this fine morphology. One of the components is a polymer comprising predominately stereospecific polypropylene, preferably isotactic polypropylene. This is the component with greater crystallinity (an XPP). A second component is a copolymer of propylene and at least one C₂, C₄-C₂₀ α-olefin, preferably ethylene. This is the component with lesser crystallinity (an SXPP). In the copolymer the propylene is preferably polymerised substantially stereospecifically. Preferably the copolymer has a substantially uniform composition distribution, preferably as a result of polymerisation with a metallocene catalyst. Most preferably, said XPP is an ethylene propylene copolymer, e.g. ethylene propylene semicrystalline elastomer.

It has been found that blending an at-least-one XPP and an at-least-one SXPP results in advantageous processing characteristics while still providing a composition having decreased flexural modulus and increased tensile strength, elongation, recovery and overall toughness. A third polymeric component which is another crystallizable propylene α-olefin copolymer (an SXPP2) has a crystallinity between those of the XP and SXPP. One type of PP blend suitable for injection moulded flexible thin walled mouldings comprises a crystalline isotactic or syndiotactic polypropylene (XPP) with a semi-crystalline α-olefin PP copolymer (SXPP) of the same tacticity as the XPP, preferably an ethylene propylene copolymer containing 4 wt. % to 35 wt. % α-olefin, preferably ethylene, and optionally a second propylene α-olefin copolymer with a crystallinity intermediate between the XPP and SXPP and with similar tacticity. These blends have heterophase morphology. It is believed that this matching of stereoregularity increases the compatibility of the components and results in improved adhesion at the interface of the domains of the polymers of different crystallinities in the polymer blend composition. Narrow intermolecular and intramolecular compositional distribution in the copolymer is preferred, but not essential. These and similar blends may be particularly suitable for the manufacture of flexible injection moulded flexible thin walled mouldings and other containers that are subjected to heating by such methods as heat-filling with the product the container is required to contain and/or heat treating the filled container by methods such as retorting. Blend composition can vary widely depending on the application and may comprise 1% to 95% by weight of XPP and a SXPP with greater than 65 percent by weight propylene and preferably greater than 80% by weight propylene.

Polypropylene-based at least one polymer compositions that have low flex modulus have particular utility for injection moulded flexible thin walled mouldings. The following are illustrations of some broad formulations that are capable of providing suitable low-flex-modulus PP compositions.

### Formulation Type 1

1. 8-25% crystalline PP or PP copolymer, most preferably 12-18%. If it is a copolymer, it should have at least 85% by weight of PP, preferably more than 90%.
2. 75%-92%, most preferably 82-88%, of two elastomeric polymers, Polymer a) and Polymer b): Polymer a) having 15-32% α-olefin, preferably 25-30%, optionally including 0.5-5% diene and Polymer b) having 32-45% α-olefin, preferably 35-40%, optionally including 0.5-5% diene. The weight ratio of polymer a) to polymer b) is 1:5 to 5:1.

The above composition may be prepared by sequential polymerisation or blending. The preferred α-olefin is ethylene. Depending on properties needed, the above compositions may be used in combination with EPR (ethylene/propylene copolymers), ethylene/propylene/diene terpolymers (EPDM), ethylene/C₄-C₁₂ α-olefins (eg. ethylene/octane such as Engage). Such elastomeric polymers may be present in 5%-80% weight of composition.

### Formula Type 2:

1) 10-60 % of a crystalline propylene homo or co polymer
2) 10-40 % propylene/ethylene copolymer insoluble in xylene (i.e. low ethylene copolymer content) and
3) 30-60% ethylene/propylene copolymer soluble in xylene at room temp (i.e. high ethylene copolymer content)

The above composition may be prepared by sequential polymerisation or blending.

### Formula Type 3 :

1) 70-98% of a crystalline PP homo or copolymer
2) 2-30% somewhat xylene insoluble propylene/ethylene copolymer (i.e. relatively low ethylene copolymer)

This blend has a relatively high flex mod, due to the relatively high % crystalline copolymer and relatively low α-olefin PP copolymer, and may be prepared by sequential polymerisation or blending.

Other types of formulations include simple blending of a variety of different types of PP at least one polymers such as have been mentioned above, preferably PP homo polymers of different tacticities and PP α-olefin copolymers of various tacticities and degrees of α-olefin content together with at least one compatible polymers of various types, particularly mPEs and PP homo polymers of different tacticities and PP α-olefin copolymers of various tacticities and degrees of α-olefin content having a lower flex modulus than the PP at least one polymer used in the particular blend.

In addition to its use in PP blends, blends of HD/MD/LDPE with PE copolymers that can act as 'tie molecules', eg. low density mPE, can also be improved using the techniques of spherulite boundary strengthening. This enables the tie molecules to be concentrated at the crystal boundary, which effectively increases the number of tie molecules at the crystal interface, which in turn leads to increased blend ESCR.

During the development of the invention, the applicant has conducted work involving nanocomposites and particularly those based on polyolefin at least one polymers. In doing so, the applicant has been surprised by the dramatic improvement in ESCR performance that the incorporation of nanoparticles or nanocomposites confers on particular blends. In particular, LD, MD and HD blends that we know from experience have very high failure rates within a couple of hours of the commencement of the test passed it with very low to 0% failure when nanocomposite was incorporated. We believe that nanocomposite blends offering these significant ESCR improvements have utility in applications and manufacturing methods including injection moulding, blow moulding, rotomoulding and extrusion. As an example, the ESCR and other physical property improvements that we achieved with HDPE-based nanocomposite blends confirm that the blends of the present invention have application in pipe, wire, cable and other extrusion applications, injection mouldings for the auto industry amongst others, rigid packaging of various types, film, rotomoulded articles such as drums and tanks, etc.

Higher requirements are constantly being placed upon the mechanical load-bearing capability of polyolefin, and particularly polyethylene, moldings. In particular, there is a requirement for highly environmental-stress-cracking-resistant, impact-resistant and generally stiff, relatively stiff and rigid products which are particularly suitable for the production of automotive mouldings, hollow articles, pressure pipes, wire and cable coatings, etc. The requirement for simultaneous good environmental-stress-cracking resistance and stiffness is not easy to meet, since these are usually regarded as contradictory properties. While stiffness increases with the density of the polyolefin, and particularly polyethylene, environmental-stress-cracking resistance decreases as density increases.

For hollow articles and pressure pipes it has proven advantageous to use blends made from a high-molecular-weight, low-density ethylene copolymer and a low-molecular-weight, high-density ethylene homopolymer, described, for example, by L. L. Bohm et al., Adv. Mater. 4, (1992), 234-238. Similar polyethylene blends are disclosed in EP-A 100 843, EP-A 533 154, EP-A 533 155, EP-A 533 156, EP-A 533 160 and U.S. Pat. No. 5,350,807.

An important application for bimodal polyethylene blends is the production of pressure pipes for conveying gas, drinking water and waste water. Pressure pipes made from polyethylene are increasingly replacing metal pipes. An important factor in applications of this type is very long service life of the pipe, without fear of aging or brittle failure. Even small defects or indentations in a pressure pipe can grow, even at low pressures, and cause brittle failure. This process can be accelerated by temperature increase and/or aggressive chemicals.

As such, in a further development, we have found, surprisingly, that nanoparticles of a wide variety of non-polymers and polymers may be used as effective compatible agents either in accordance with the first and second aspects of the invention described above, and also in other non-related applications. Particularly, it has been found that nanoparticles may be used to improve the ESCR and/or tear strength of some polymers and polymer blends.

Thus, according to a third aspect of the invention there is provided the use of nanoparticles to improve ESCR and/or tear strength of a polymer or polymer blend.

Such blends may be particularly suitable for the production of flexible thin walled articles as well as articles such as piping, cabling, film and other articles produced by a variety of processes, including injection moulding, extrusion, thermofonning, rotomoulding and other processes that will be familiar to those skilled in the art.

It will be appreciated that the third aspect of the invention therefore also provides for a process for the manufacture of flexible thin-walled articles including injection moulding a blend of at least one polymer having nanoparticles dispersed therein.

The blends of this aspect of this invention may be processed by a number of processing methods such as, but not limited to, injection moulding, blow moulding, thermoforming, extrusion, thermoforming and rotomoulding. The blends may be suitable for a wide variety of different products in which improved ESCR, stiffness, barrier and other physical properties are advantageous. The blends of this aspect of the present invention are particularly suitable for the production of hollow articles and pressure pipes, wire and cable coatings as well as articles for the automotive, packaging and other industries.

The blends preferably include at least one polymer and a nanocomposite and at least one compatible agent, more preferably a polyolefm, at least one compatible agent and a nanocomposite, further preferably an mPE, a polypropylene compatible agent and a nanoclay nanocomposite and most preferably an mPE together with a LD, MD or HDPE, a polypropylene homo or copolymer compatible agent and a nanoclay nanocomposite. Note that for the purposes of the discussion of this aspect of the invention, the term LDPE includes LLDPE.

Blends of this aspect of the present invention provide improved ESCR and other physical properties than prior art blends. As a consequence they enable the formulation of blends with equivalent ESCR and other physical properties compared to the prior art blends but with higher MFIs that would otherwise be the case, with commensurate improvements in ease of processing savings and consequent savings in power usage and machinery wear- and-tear. The blend physical property improvements also potentially enable moulding weight reduction and down-gauging of films as well as reduced moulding/film weight while achieving a required flex modulus. At the same time they also provide better barrier (eg. impermeability) properties to the mouldings.

A wide variety of polymers may be used as the bulk polymer of a blend of the present invention. These polymers have previously been discussed herein and reference is made to the above description in that regard. Similarly, compatible agents or polymers may be included in the blends according to this aspect aof the invention. Reference is also made to the above desciption in that regard.

More particularly, polymers suitable for use in the nanocomposites of the present invention are exemplified, but not limited to, polymers such as polyolefins, including plastomers, substantially linear metallocene polyethylene α-olefin copolymers, low density polyethylene (LDPE), linear low density polyethylene (LLDPE), medium density polyethylene (MDPE), high density polyethylene (HDPE), isotactic, syndiotactic and atactic polypropylene (PP) such as polypropylene with varying degrees of isotacticity such as are described in, amongst others, WO 01/27169, WO 99/52955, WO 99/52950 and WO 99/29749, α-olefin copolymers of ethylene, propylene or butene, preferably α-olefin copolymers of ethylene, propylene or butene prepared using metallocene or similar catalysts capable of producing super-random distribution of the α-olefin copolymer within and amongst the molecular chains, polyamides such as poly(m-xyleneadipamide) (MXD6), poly(hexamethyleneadipamide) and poly(-caprolactam), polyesters such as poly(ethylene terephthalate), polycarbonates and polyacrylonitriles.

The nanoparticles in blends of this aspect of the present invention are preferably clays, most preferably organo-clays. Blends of the present invention are particularly useful for the production of products with significantly improved ESCR and barrier properties relative to the same blend without the nanoparticles. The incorporation of nano-sized particles into blends also has the benefit of improving the ESCR of the blend relative to the same blend without the nano-sized particles, which in turn significantly enlarges the blend formulation window.

Further, we have found that some types of polymers, preferably unsaturated polymers such as polyvinyl chloride and polystyrene, more preferably polyolefins and even more preferably plastomers, substantially linear polyethylene, metallocene branched polyethylene and polypropylene copolymers and most preferably plastomers and 'substantially linear polyethylene' polymers and polypropylene copolymers having densities between 0.85 and 0.92 may, with the addition only of nucleating agents as a means of improving the ESCR of the mouldings of the present invention, be used to produce mouldings of the present invention suitable for packaging some less aggressive products. However, the addition of compatible polymers such as polypropylene and polypropylene copolymers to such polymers in addition to the nucleating agents results in better overall ESCR resistance, and are generally preferred.

Assuming that a PP compatible agent in a PE polymer blend has an average spherical particle diameter of 500nm, each particle has a surface area of 785,000nm² and a volume of 65,000,000nm³. By comparison, a typical clay platelet has a thickness of ±1nm, which means that in order to have the same volume as the 500nm diameter sphere, it must have L X W dimensions equivalent to 8062 X 8062nm. Assuming that the average clay platelet is 200 X 200 X 1nm (i.e. it has an aspect ratio of 200), it has a volume of 40,000nm³. Therefore in volume terms, one 500nm diameter PP spherical particle is equivalent to 1,625 clay platelets. Assuming that the density of the clay is ±1.8 (i.e. 2X that of the PP), this means that a given weight percentage of exfoliated clay platelets has ±800X as many particles as the PP. In other words, in terms of theoretical nucleation ability the clay-dimension particles offer 800 times as many nucleation sites/particles as the PP. This goes a long way towards explaining the increase in blend ESCR that occurs when nanocomposites are added to the blend or substituted for some of the PP in blends.

The addition of nano-sized particles for the production of mouldings of the present invention frequently leads to improved properties of the blends of the present invention. Such blends may contain fine, ultra-fine or nanoparticle-sized polymers or clays or metal oxides such as ultra-fine barium sulphate (which may have a particle size of 10nm), particles of other inorganic metal oxides such as those of zinc, electrically conductive tin, e.g., antimony containing tin oxide, iron, zirconium, aluminium, chromium, yttrium, europium, mixtures thereof, among others. Fine, ultra-fine and nano-sized particles may be powders having a primary crystallite size of from about 1 to 200 nm, preferably <100nm and often from about 4 to about 60 nm. These crystallites can form agglomerates with an average size up to about 300 nm. Also included in the definition of nanocomposites are blends containing non-clay crystallising/nucleating agents capable of crystallising/nucleating the at least one polymer(s) and/or at least one compatible agent(s) of the blend. Although for 'normal' mouldings commercial nucleating agents are often added in quantities at 0.1% or less, for the present invention it is sometimes preferable to add crystallising/nucleating agents in quantities greater than 0.1 weight percent, preferably >0.3%, more preferably >0.5% and sometimes >1%. The optimum amount added to a particular blend may be determined by experimentation. There are many non-clay crystallising/nucleating agents, such as metal salts of organic acids such as sodium and lithium benzoates, sorbitol derivatives, glycol derivatives, etc. which are useful for the formulation of blends of the present invention and are well known to those skilled in the art.

Nanoparticles, preferably those with very high aspect ratios and particularly, but not exclusively, those consisting of modified clay minerals, can advantageously be used as an ACA for the manufacture of mouldings of the present invention. In addition to enhancing the barrier properties of mouldings, nanoparticles can also enhance their heat stability, flame retardency and other mechanical properties.

When the nanoparticle is a clay, organo-clay or other particle of nano-proportions with a high aspect ratio, even small weight percentages of the nanoparticles relative to the polymer material provide increases in the ESCR, impermeability and other physical properties of mouldings of the present invention. As a guide, the higher the average aspect ratio of the nanoparticle and the greater its average diameter, the greater the improvement in barrier properties that the particles will confer on the nanocomposite. For example, a nanocomposite in which the nanoparticles have an average aspect ratio of 1000 will usually have better barrier properties than a nanocomposite with the same weight percentage and chemical type of nanoparticles but with an aspect ratio of 100. Conversely, and using the above example, the nanocomposite in which the nanoparticles have an average aspect ratio of 100 will often have a better ESCR than the nanocomposite with the 1000 aspect ratio nanoparticles because there will be a greater number of individual particles in the former nanocomposite, which in turn will result in a greater number of nucleation sites for the polymers, hence a greater number of polymer crystals will be formed, which in turn will result in an inherently better ESCR. When the nanoparticle is a particle that does not have a specially high aspect ratio, such as nano-sized TiO₂, other metal oxides, etc., even small weight percentages of the nanoparticles relative to the polymer material provide increases in the ESCR and other physical properties of mouldings of the present invention, but the barrier properties of such nanocomposites will generally not be as good as a nanocomposite in which the nanoparticle has a high aspect ratio.

Nanoparticle/polymer blends for mouldings of the present invention may be fabricated through various methods. One such method is compounding wherein the ingredients are intimately melt-mixed together into as nearly a homogeneous mass as is possible. Other methods of integrating the polymer layer in between the clay/organo-clay platelet include in situ polymerisation, solution intercalation and melt exfoliation. The organo-clays preferred for the present invention differ from ordinary untreated clays in the fact that the untreated clays typically form only ordinary phase-separated mixtures when blended or mixed with a polymer. The clays which are organically modified are more easily dispersed in the polymer matrix and can form a nanocomposite of two types: i.e. mainly intercalated or mainly exfoliated structures. In order to obtain better compatibility between the polymer-and particularly polyolefin polymers-and the organo-clay it is often desirable that the organo-clay contains substituted alkyl side chains. Blends particularly suitable for mouldings of the present invention comprise between about 0.01 and about 25 wt %, preferably between 0.5 and 25 wt %, more preferably between 0.5 and 15 wt % and most preferably between 0.5 and 10 wt % of at least one expanded organo-clay

The organo-clays suitable for tube production generally have a particle size from about 1 to about 10,000 nanometres, desirably from about 100 to about 2,000 nanometres, and preferably from about 200 to about 500 or 1,000 nanometres. When the main polymer to be used to form the nanocomposite and/or nanocomposite master-batch (i.e. a concentrate for subsequent dispersion in another polymer) is a polyolefin, it has been found that, all other things being equal, the greater the degree of short-chain branching in the polymer (as measured by SCBI) the greater the extent of exfoliation of the organo-clay, and hence the better the overall properties of the nanocomposite. All things being equal, in the case of olefin/α-olefin and other copolymers the greater the percentage of α-olefin or other copolymer in the polymer the greater the extent of exfoliation of the nanocomposite. Also, polymers exhibiting super-random distribution of the monomers within the polymer molecules are particularly suited to the production of nanocomposites of the present invention as their use tends to result in greater degrees of exfoliation than similar polymers not exhibiting super-random distribution of the monomers. Such super-random polymers may be catalysed by metallocene or similar catalysts which are well known in the art.

Particularly advantageous are blends in which the fine, ultra-fine or nanoparticle-sized particles have the following characteristics:
1) Average particle size between 0.9 and 100nm and an aspect ratio of between 10 and 2000.
2) Preferably has a thickness of <2nm and a diameter between 10 and 1000nm.

Typically, clays of various types such as the following are preferred at least one compatible agents which may have the above characteristics. Preferred swellable layered clay materials are phyllosilicates of the 2:1 type having a cation exchange capacity of 50 to 200 milliequivalents per 100 grams of mineral. The most preferred swellable layered clay materials are smectite clay minerals such as montmorillonite. Other non-clay materials having the above described ion exchange capacity and size, such as chalcogens may also be used as the source of platelet particles for polymer blends for tube production.

Clays naturally tend to exist as 'tactoids' or 'galleries', which are an agglomeration of up to and sometimes greater than 100 individual clay platelets. In order to achieve the maximum benefit from the nanocomposites, and particularly clay nanocomposites, the individual nanoparticles need to be evenly dispersed throughout the polymer matrix. In the case of clays, the process of separating the individual clay platelets is called exfoliation. Exfoliation may be achieved in a number of ways, but the most commonly used method is to introduce an appropriate intercalant into the galleries of the clay and then apply shear to separate the individual platelets. The intercalant also should preferably have a functional group that can interact with the polymer and effectively link the platelets to the polymer. An epoxy resin such as bisphenol A can be used as an intercalant.

There are a number of intercalants suitable for the production of nanocomposites for the present invention. Particularly useful for polyolefin-at least one polymer blends are intercalants comprising an organic compound having a non-polar portion bonded to a polar portion. The non-polar portion may, for example, be a saturated oligomer of isoprene which tends to be compatible with non-polar polymers, especially copolymers of both propylene and ethylene. The polar portion tends to have an affinity for the silicate platelets of the clay material. Consequently, the organic compound enhances the compatibility of the intercalated clay materials that, when melt blending with sufficient shear to exfoliate the intercalated clay material, results in the exfoliation of intercalated clay into the polymer.

There are a number of ways in which nanocomposites can be prepared and which are described in the literature. Some of the methods that may be particularly suited to the production of nanocomposites suitable for tube production are highlighted below. Of particular interest for the production of mouldings of the present invention are nanocomposites in which the bulk polymer is a polyolefin such as polyethylene or polypropylene or a polyester such as PET or PEN, said polymers being particularly suited, by reason of cost and other polymer properties, for the production of mouldings of the present invention. As is well known, forming nanocomposites with polyolefins presents special challenges due to the essentially non-polar nature of said polymers and the consequent difficulties in achieving significant degrees of exfoliation of the organo-clay. However, the development of new intercalants and methods of achieving such nanocomposites have resulted in improvements in the performance and manufacture of polyolefin-clay nanocomposites. These developments, together with the exceptionally high shear rates generated during the injection moulded tube process, and which facilitate the exfoliation of non-exfoliated clays, can produce polyolefin nanocomposites that have good barrier and other beneficial properties.

A preferred way of improving the degree of exfoliation of organo-clays in polyolefins is through the addition and compounding together of a modified polyolefin-such as a maleic anhydride modified polyolefin polymer or oligomer-and an organic cation (such as a quaternary ammonium) exchanged multi-layered clay. This process results in a masterbatch which is then added to and compounded with a suitable polyolefin. The organo-clay thus produced has sufficient polarity to enable significant exfoliation of the clay when subjected to the shear stress during compounding with the polyolefin, and particularly during the high shear manufacturing process to produce mouldings of the present invention.

Another approach is to incorporate a hydrogenated cyclic polymer, for example a C₉ aromatic polymer, that is compatible with both the polyolefm bulk polymer of a blend and a cation exchanging layered silicate material such as clay and compounding the resultant mix at an appropriate temperature. Using an hydrogenated C₉ aromatic polymer as an example, the cation exchanging layered silicate material are added in roughly equal amounts. Preferably the cation exchanging silicate material is washed in water to remove impurities, and may advantageously be subsequently treated with a suitable quaternary cation such as a quaternary ammonium cation. An example of a suitable hydrogenated C₉ aromatic polymer is a polymer with the following formula:

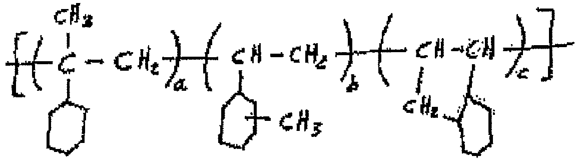

Polymers conforming to the above formula are available from Arakawa Chemical Industries under the trade name ARKON. Other cyclic polymers containing unsaturated bonds, either within the cyclic group or in the polymer chain itself, will be suitable for the production of polyolefin organo-clay nanocomposites and may be determined by experimentation. One advantage of polymer/organo-clays manufactured using cyclic groups is that because they preferably have cyclic groups within them, they may well be particularly suitable as oxygen scavengers, particularly when compounded with catalysts capable of catalysing the oxidation of the cyclic and/or unsaturated functional groups. It is known that many oxygen scavengers containing cyclic groups produce fewer by-products than linear oxygen scavengers and which can migrate and thereby contaminate products packed into containers incorporating said oxygen scavengers. In such cases the polymer/organo-clay will perform the dual functions of a nanocomposite and oxygen scavenger (see Blends of the Present Invention).

Another method for preparing organo-clays capable of incorporation into polyolefins is to first functionalise the nanofiller with an aminosilane. Thereafter, a carboxylated or maleated polyolefin is grafted to the filler through an amine-carboxyl reaction. The resulting modified filler is dispersed in a semi-crystalline polyolefin (eg. polyethylene or polypropylene). Co-crystallization between the carboxylated or maleated polyolefin and the semi-crystalline polyolefin can improve interaction between the filler and semi-crystalline polyolefin.

Yet another method of preparing a polyolefin-compatible nanocomposite is to prepare an organophilic clay that is dispersible in non-polar organic solvents. The organophilic clay can then be treated with an alkyl aluminoxane and subsequently a catalyst, including Ziegler-Natta and metallocene catalysts, to form a complex that promotes olefin or styrenic polymerisation and platelet dispersion. The nanocomposite can be prepared directly by in situ polymerization of the olefin or the styrene at the nanofiller particles without shear, without an ion exchange step, and without the need to incorporate polar substituents into the polyolefin or polystyrene.

Another nanocomposite suitable for mouldings of the present invention consists of a non-polar bulk polymer such as polyethylene or polypropylene, an intercalated cation exchanging multi-layered silicate material such as an acid or quaternary ammonium treated montmorillonite or sepiolite clay, dispersed in the bulk polymer and an organic cation, such as polyethylene or polypropylene terminated by an amine group, the organic cation having a pendent polymer chain, the polymer of the pendent polymer chain being miscible with the bulk polymer. The nanocomposite material is made by blending the molten bulk polymer with the cation exchanging multi-layered silicate material and the organic cation.

It is well known that different intercalants result in different degrees of exfoliation; for example, octadecyl amine onium clay intercalant produces significantly better nylon-based nanocomposite barrier films compared to the same polymer nanocomposite in which the clay intercalant is an n-alkyl dimethyl benzyl amine onium ion

Yet another beneficial and interesting nanoparticle suitable for use in a nanocomposite consists of an organic chemical/clay intercalate that has been ion-exchanged and reacted and intercalated with one-or-more quaternary ammonium compounds and an anionic material (such as sodium lauryl sulphate) which is further blended into a polymer resin to make a nanocomposite composition. This material can be blended into a wide variety of polymers. This kind of system disperses well in a number of different types of polymers, and has particular utility in non-polar polymers such as PE and PP.

Another type of intercalate consists of a functional organic monomer having at least one hydroxyl functionality and/or an aromatic ring. The intercalant monomer should preferably include an aromatic ring and/or have a hydroxyl or polyhydroxyl functionality to be sufficiently bound to the clay platelets. Such bonding, via a metal cation of the clay sharing electrons with electronegative atoms of one or two hydroxyl or aromatic ring structures, to an inner surface of the phyllosilicate platelets provides adherence between the intercalant monomer molecules and the platelet inner surfaces of the layered material, and the clay is subsequently exfoliated by processing with a polymer, preferably a polyolefin polymer, and if appropriate, a compatibiliser such as a maleic anhydride-modified polyolefin of the same type as the bulk polymer.

Yet another nanocomposite composition is prepared by co-intercalation of onium ions and an anhydride-curable epoxy resin. The ion-exchange binding between the onium ions and the platelet surface, via ion-exchange with intergallery inorganic cations, eliminates the presence of water molecules associated with the inorganic cations. Therefore, the onium ion-exchange enables the conversion of the hydrophilic interior clay surface to hydrophobic and, therefore, hydrophobic epoxy polymer molecules can then be intercalated into the clay galleries to increase the d-spacing of adjacent layers. The epoxy may, if appropriate, be reacted with a suitable epoxy curing agent added to the bulk polymer, which in turn will assist with the exfoliation when suitably compounded and may further improve the barrier properties of the nanocomposite thus formed as well as improve the adhesion of CVD and traditional varnishes/lacquers to the tube.

Another interesting synergistic intercalant combination consists of a long chain alkyl intercalant and/or an aromatic ring-containing intercalant, both having an electrostatic functionality at a layered material-complexed end of the molecule that is sufficient to provide electrostatic complexing of the intercalant to the interlayer cations on the platelet surface of the layered material, and a matrix polymer-compatible functionality extending from the intercalant molecule or at a free end thereof of the intercalant. Suitable long chain and aromatic ring-containing intercalants include a polar (electrostatic) end having at least one moiety selected from the group consisting of a hydroxyl functionality; a carbonyl functionality; a carboxylic acid or carboxylic acid salt functionality; an amine functionality; an amide functionality; an ether functionality; an ester functionality; a lactam functionality; a lactone functionality; an anhydride functionality; a nitrile functionality; an n-alkyl halide functionality; a pyridine functionality; a pyrrolidone functionality; a carbon-to-carbon unsaturated bond (i.e. an alkene or alkyne) and mixtures thereof to sorb or intercalate the intercalant or mixtures of intercalants between adjacent platelets of a layered inorganic material, e.g., a phyllosilicate.

Another interesting synergistic intercalant combination consists of an alkoxylated onium ion and EVOH. The use of this intercalant combination , and specifically the use of a polymer or other chemical group with good barrier properties that is compatible with the bulk polymer, frequently results in significant reductions in OTR of such nanocomposites relative to nanocomposites that don't have such good compatibility with the bulk polymer. Using intercalants that have good barrier properties (eg. EVOH) often results in nanocomposites with improved barrier properties relative to nanocomposites made with intercalants that don't have improved barrier properties. In the case of EVOH, the compatibility of the organo-nanoparticle with, for example, a PE bulk polymer can be improved through the use of EVOH with higher levels of ethylene copolymer; if the level of ethylene copolymer in the EVOH intercalant is high enough, the need for a compatibilising agent to form the nanocomposite may be reduced or even eliminated.

The amount of modified clay material combined with the polymers in a blend should be in an amount that is sufficient to provide the desired ESCR, barrier and/or mechanical properties. The amount of modified clay material in the nanocomposites is generally about 0.1% to about 25% by weight of the composition. A preferred range of modified clay material for tube production comprises about 0.5% to about 10% of the composition. While certain clay minerals have been exemplified above it is understood that any clay mineral (both natural and synthesized) with a large contact area with the polymer to be used in said nanocomposite may be useful in tube production. Similarly it is understood that many fine, ultra-fine or nano-sized particle capable of forming a nanocomposite may be useful in the present invention, particularly if it acts as a nucleating agent for one of more of the polymers in the polymer blend.

To maximise the degree of exfoliation of any intercalated but not exfoliated galleries of the clay/organo-clay it is advantageous that the compound be subjected to very high shear rates during the manufacturing process.

As mentioned, according to this aspect of the invention there is provided the use of nanoparticles to improve ESCR and/or tear strength of a polymer or polymer blend, such blends being particularly suitable for the production of injection moulded flexible thin walled articles such as tubes.

Preferably the polymer blend of the third aspect of the present invention has an MFI>10, preferably >20, more preferably >30 and most preferably >50. Polymers containing nanosized particles of compatible agents are generally referred to as nanocomposites, although the term is more specifically applied to polymer/clay nanocomposites. Without wishing to be bound by theory, we believe that the significant increase in surface area of a given weight of compatible agent when the compatible agent is in a nanoparticle form relative the same weight of the same compatible agent in 'non-fine' or larger particle size form causes a significant improvement in ESCR, barrier and other physical properties of the polymer blend of the present invention when such nanoparticles are incorporated into the blend.

Preferably, but not essentially, to obtain optimum results in terms of barrier improvements from nanocomposites of the present invention, the nanocomposite is subjected to high shear during the forming process, such as, for example, injection moulded at high injection speeds. Measuring the injection speed in terms of millimetres of polymer flow down the longest path from the injection point to the point of the moulding furthest from said gates per 0.1 secs of fill time, the injection speed is preferably >35mm/0.1 sec, more preferably >45mm/0.1 sec, yet more preferably >55mm/0.1 sec, even more preferably >65mm/0.1 sec, yet even more preferably >75mm/0.1 sec, still more preferably >95mm/0.1 sec, yet still more preferably >115mm/0.1 sec and most preferably >129mm/0,1 sec.

In blends in which the nanoparticle-sized compatible agent of the present invention is a polymer, the median particle size of the compatible agent when dispersed within a blend is <1000nm (1µm), preferably <700nm, more preferably <500nm, yet more preferably <300nm, even more preferably <200nm, even yet more preferably <100nm, yet even more preferably <75nm and most preferably <60nm and >1nm. Unless otherwise stated, 'particle size' means the mean particle size.

Blends of the present invention containing nanoparticle-sized compatible agent that is not a polymer or clay, and is preferably a metal oxide such as TiO₂, Zinc oxide, etc. or similar metal compound or metal will have a mean particle size of <200nm, preferably <100nm and most preferably between 4 and 60nm.

Blends of the present invention containing fine, ultrafine or nanoparticle-sized compatible agents that are not a polymer or clay or metal oxide such as are defined above include metal salts such as ultrafine barium sulfate which may have a particle size of 10nm. The present invention can also use as compatible agents particles of other inorganic metal oxides such as those of zinc, electrically conductive tin, e.g., antimony containing tin oxide, iron, zirconium, aluminum, chromium, yttrium, europium, mixtures thereof, among others. The powders have a primary crystallite size of from about 1 to 100 nm, usually from about 4 to about 60 nm. These crystallites can form agglomerates with an average size up to about 300 nm.

Blends in which the nanoparticle-sized compatible agent that is not a polymer and which have the following characteristics also fall within the scope of the present invention:
3) Average particle size between 0.9 and 100nm and an aspect ratio of between 100 and 2000.
4) Preferably the thickness of the nanoparticles is between 0.9 and 100nm and 1500nm (1.5µm wide)
5) Preferably has a thickness of <2nm and a diameter between 10 and 1000nm.
   Typically, clays of various types such as are detailed below are preferred compatible agents which may have the above characteristics.

For the purposes of this invention in which clay and similar substances are the compatible agents, measurements refer only to the platelet particle and not any dispersing aids or pretreatment compounds which might be used. Suitable platelet particles are derived from clay materials which are free flowing powders having a cation exchange capacity between about 0.3 and about 3 meq/g and preferably between about 0.8 and about 1.5 meq/g. Examples of suitable clay materials include mica-type layered phyllosilicates, including clays, smectite clays, sodium montmorillonite, sodium hectorite, bentonites, nontronite, beidellite, volkonskoite, saponite, sauconite, magadiite, vermiculite, mica, kenyaite, synthetic sodium hecotorites, and the like. Clays of this nature are available from various companies including Southern Clay Products and Nanocor, Inc.

Other non-clay materials having the above described ion exchange capacity and size, such as chalcogens may also be used as the source of platelet particles under the present invention. These materials are known in the art and need not be described in detail here.

Nanoparticles, preferably those with very high aspect ratios and particularly, but not exclusively, those consisting of modified clay minerals, can advantageously be used as a compatible agents for the manufacture of injection moulded flexible thin walled articles and other articles produced by a variety of processes such as extrusion, rotomoulding etc. When the nanosize particles are clay, they usually have a width of several microns while the thickness is in the nanometers, hence the designation "nanosize" particles. The clay particles are approximately 0.1 to 25% weight percent of the polymer blend, preferably 0.1 to 10.0 weight percent of the polymer blend. Each of the clay particles has a thickness of between 0.9 and 100 nanometers and an aspect ratio of between 100 and 2000, and the polymer may be slightly modified by facilitation agents for the integration of the clay particles.

In addition to enhancing the barrier properties of containers and other articles, the nanoparticles of the present invention can also enhance the heat stability and mechanical properties of thin walled flexible articles such as containers and other products produced therewith. An increased heat stability for a container is important in order to allow for "hot-filling" applications. "Hot filling" applications allow for aseptic uses of containers in the food processing industry and also extend the shelf life of various food products. Even small weight percentages of the nanoparticles relative to the polymer material provide substantial increases in the ESCR, impermeability and other physical properties of flexible thin walled articles.

The nanoparticle/polymer blend of the present invention may be fabricated through various methods, including those described herein.

When the main polymer to be used to form the nanocomposite is a polyolefin, it has been found that, all other things being equal, the greater the degree of short-chain branching in the polymer (as measured by SCBI) the greater the extent of exfoliation of the organoclay, and hence the better the overall properties of the nanocomposite. Similarly, in the case of olefin α-olefin and other copolymers, the greater the percentage of α-olefin or other copolymer in the polymer, the greater the extent of exfoliation of the nanocomposite. Also, polymers exhibiting super-random distribution of the monomers within the polymer molecules are particularly suited to the production of nanocomposites of the present invention as their use tends to give greater degrees of exfoliation than similar polymers not exhibiting super-random distribution of the monomers. Such super-random polymers may be catalysed by metallocene or similar catalysts which are well known in the art.

Polymers suitable for use in the nanocomposites of the present invention are exemplified, but not limited to, polymers as described above for the polymer component, including polymers such as polyolefins, including plastomers, substantially linear metallocene polyethylene α-olefin copolymers, low density polyethylene (LDPE), linear low density polyethylene (LLDPE), medium density polyethylene (MDPE), high density polyethylene (HDPE), isotactic, syndiotactic and atactic polypropylene (PP) such as polypropylene with varying degrees of isotacticity such as are described in, amongst others, WO 01/27169 (P&G), WO/99/52955 (Rieger), WO 99/52950 (Rieger) and WO/99/29749 (ExxonMobil), α-olefin copolymers of ethylene, propylene or butene, preferably α-olefin copolymers of ethylene, propylene or butene prepared using metallocene or similar catalysts capable of producing super-random distribution of the α-olefin copolymer within and amongst the molecular chains, polyamides such as poly(m-xyleneadipamide) (MXD6), poly(hexamethylenesebacamide), poly(hexamethyleneadipamide) and poly(-caprolactam), polyesters such as poly(ethylene terephthalate), and polyacrylonitriles. Other polymers suitable for use in the nanocomposites of the invention include ethylene vinyl alcohol copolymers, ethylene vinyl acetate copolymers, polyesters grafted with maleic anhydride, PVdC, aliphatic polyketone, and LCP (liquid crystalline polymers). A polyketone is exemplified by Carillon.RTM. which is produced by Shell. A liquid crystalline polymer is exemplified by Vectra.RTM. which is produced by Ticona. Further polymers that may be used include epoxy and polyurethane adhesives.

While certain clay minerals have been exemplified above it is understood that any clay mineral (both natural and synthesized) a large contact area with the polymer to be used in said nanocomposite are useful in the present invention.

Unless specifically set forth and defined or otherwise limited, the following terms as used herein have the following meanings.
"Aspect Ratio" shall mean the ratio of a particular object's width to its thickness.
"Exfoliate" or "exfoliated" shall mean individual platelets of a modified clay so that adjacent platelets of the modified clay can be dispersed individually throughout a carrier material, such as water, a polymer, an alcohol or glycol, or any other organic solvent.
"Exfoliation" shall mean a process for forming an Exfoliate from a modified clay.
"Intercalant" shall mean an organic molecule such as an ammonium ion that is absorbed between platelets of the layered material and complexes with the Na.sup.+ cations on the platelet surfaces to form an Intercalate.
"Intercalate" or "intercalated" shall mean a Layered Material that includes organic molecules disposed between adjacent platelets of the Layered Material to increase the interlayer spacing between the adjacent platelets to at least about 0.5nm., preferably at least about 1nm.
"Intercalation" shall mean a process for forming an Intercalate.
"Layered Material" shall mean an inorganic material, such as a smectite clay mineral, that is in the form of a plurality of adjacent, bound layers and has a thickness, for each layer, of about 0.3 to 5nm, preferably about 1nm.
"Matrix monomer" shall mean a monomer that the Intercalate or Exfoliate is mixed with or dispersed.
"Matrix polymer" shall mean a thermoplastic or thermosetting polymer in which the Intercalate and/or Exfoliate is mixed or dispersed to form a Nanocomposite.
"Modified clay" shall mean layered material that has undergone intercalation.
"Nanocomposite" shall mean a mixture that includes a monomer, polymer, oligomer, or copolymer having dispersed therein a plurality of individual platelets obtained from an exfoliated modified clay.
"Platelets" shall mean individual layers of the Layered Material.

Smectite is a 2:1 type layer silicate with an expandable lattice carrying an excess negative layer charge. The 2:1 ratio refers to a layered structure consisting of an octahedral metal oxide sheet sandwiched between two tetrahedral silicon oxide sheets.

Carbon-carbon double bonds are particularly susceptible to reaction with the intermediate species. Such carbon-carbon bonds are often found in foods and beverages, pharmaceuticals, dyes, photochemicals, adhesives, and polymer precursors. Virtually any product which has complex organic constituents will contain such carbon-carbon double bonds or other oxygen reactive components, and hence can undergo oxidative reactions. Thus, if the oxidation products adversely affect the performance, odor or flavor of the product, then removing the oxygen which is present (either dissolved in or trapped with the product), preventing oxygen ingress, or inhibiting the reactions of oxygen will benefit the product.

In a further development, we have found that the incorporation of oxygen scavengers into nanocomposites significantly enhances the oxygen barrier properties of nanocomposites for a wide variety of applications, including films and other articles made by extrusion or casting, injection stretch, injection blow, thermoforming and other plastic manufacturing processes well known to those skilled in the art. The development of nanocomposite/oxygen scavenger compositions of the present invention is particularly, but not exclusively, suited to the injection moulding of flexible thin walled articles where enhanced oxygen and other barrier properties are required. All nanocomposites, irrespective of polymer type, are suitable for use with this invention. For example, polyamides such as the various nylon polymers, polyesters such as PET and PEN, polycarbonates and polyolefins are particularly suited for use with the present invention, Polyolefins of various types in particular, by virtue of their relatively low cost and easy processability, are advantageously used in the present invention, and the very good barrier and oxygen scavenging properties of the invention relative to 'standard' polyolefins, polyolefin nanocomposites and polyolefins containing oxygen scavengers when used alone enables the use of polyolefins for applications requiring barrier, particularly to oxygen, for which the aforementioned polyolefins and compositions thereof are unsuitable.

Although the following discussion uses mainly polyolefin nanocomposite/oxygen scavenger compositions to illustrate the present invention, it will be understood that the same principles apply to other polymer types that can be compounded to produce nanocomposite/oxygen scavenger compositions, and which are therefore included in the present invention. The term 'polyolefin' may therefore be substituted by, for example, polyester, polyamide, etc. Therefore with the aforementioned in mind, the present invention includes:
- Polyolefin/nanocomposite/oxygen scavenging compositions
- Polyolefin/nanocomposite/oxygen scavenging compositions used for injection moulding applications
- Polyolefin/nanocomposite/oxygen scavenging compositions used for injection moulding flexible thin-walled articles as defined herein
- More particularly polyolefin/nanocomposite/oxygen scavenging compositions having an MFI>10, preferably >20, more preferably >30 and most preferably >50
- Yet more particularly polyolefin/nanocomposite/oxygen scavenging compositions having polymer components with MFI>10, preferably >20, more preferably >30 and most preferably >50.
- Yet more particularly polyolefin/nanocomposite/oxygen scavenging blends having polymer components with MFI>10, preferably >20, more preferably >30 and most preferably >50 and incorporating compatible agents and/or polymers for improved ESCR and barrier performance.
- Preferably when using the present invention for the manufacture of thin walled flexible articles, when measuring the injection speed in terms of millimetres of polymer flow down the longest path from the injection point to the point of the moulding furthest from said gates per 0.1 secs of fill time, the injection speed is preferably >35mm/0.1 sec, more preferably >45mm/0.1 sec, yet more preferably >55mm/0.1 sec, even more preferably >65mm/0.1 sec, yet even more preferably >75mm/0.1 sec, still more preferably >95mm/0.1 sec, yet still more preferably >115mm/0.1 sec and most preferably >129mm/0,1 sec.

Such compositions are particularly suited to the injection moulding of flexible thin walled articles, and the nanocomposite/oxygen scavenging compositions display synergistic benefits with regard to barrier properties (measured as OTR) relative to the same essential compositions but in which the nanocomposite and oxygen scavenging components feature as separate components. The compositions may be prepared by a variety of means, such as by mixing the blend the components under high shear mixing conditions or other means capable of producing an intimate mix, such as in a twin-screw extruder. The nanocomposite/oxygen scavenger blend may also be produced by first preparing a nanocomposite and then as a separate step compounding the oxygen scavenger into the nanocomposite. Alternatively, the polymer/oxygen scavenger blend may be prepared and the organo-clay, or masterbatch thereof, subsequently compounded into the polymer/oxygen scavenger blend. Other means to achieve a well mixed blend will be apparent to those skilled in the art.

In another variation on the present invention, by selecting appropriate intercalants for the preparation of the organo-clay component of the nanocomposite to be used in the nanocomposite/oxygen scavenger blend of the present invention, it is possible to use as the intercalant a molecule that can also act as an oxygen scavenger. This may be achieved by, for example, selecting as an intercalant an organic molecule that has oxygen scavenging properties or by grafting, polymerising or otherwise incorporating an oxygen scavenging functional group(s) onto a 'standard' (i.e. non-oxygen scavenging) intercalant

US 6423776 describes the effects of incorporating an oxygen scavenger into a polyamide/nanocomposite film. However, it does not describe any benefits to the use of polyolefin/nanocomposite/oxygen scavenging compositions, nor the use of a nanocomposite/oxygen scavenger combination in relatively high MFI compositions that are suitable for injection moulding, and particularly for injection moulding of flexible thin walled articles.

For the purposes of this invention, the term polyolefin means a polymer whose molecular makeup consists of more that 50% of an olefin such as ethylene, propylene, butene. In other words, more than 50% of the number of monomer molecules that are polymerised to make the polymer are olefins. Preferably the polyolefin is a low molecular weight plastomer, 'substantially linear polyethylene, metallocene long-chain branched polyethylene or copolymer of the aforementioned ethylene polymers, linear or branched isotactic or syndiotactic polymers, particularly polypropylene and polybutene homopolymers or random copolymers, including linear or branched isotactic or syndiotactic polypropylene or polybutene homopolymers or random copolymers which have a structure in which their tacticity varies within the range of between 25 and 60% of [mmmm] pentad concentration. Also suitable for use in the present invention are linear or branched isotactic polymers having an arbitary or rather regular sequence of isotactic and atactic blocks within the polymer molecules.

When the main polymer to be used to form the nanocomposite is a polyolefin, it has been found that, all other things being equal, the greater the degree of short-chain branching in the polymer (as measured by SCBI) the greater the extent of exfoliation of the organoclay, and hence the better the overall properties of the nanocomposite. Similarly, in the case of olefin α-olefin and other copolymers, the greater the percentage of α-olefin or other copolymer in the polymer, the greater the extent of exfoliation of the nanocomposite. Also, polymers exhibiting super-random distribution of the monomers within the polymer molecules are particularly suited to the production of nanocomposites of the present invention as their use tends to give greater degrees of exfoliation than similar polymers not exhibiting super-random distribution of the monomers. Such super-random polymers may be catalysed by metallocene or similar catalysts which are well known in the art.

There are many oxygen scavenging systems that are suitable for use in the nanocomposite/oxygen scavenger compositions of the present invention. Some of these are described below, but other systems not described may also be suitable. The suitability of a particular system may be determined by experimentation, as may the optimum type of nanocomposite to be used in conjunction with a particular oxygen scavenger(s) in the invention. Various types of nanocomposites and various methods for their preparation are described above, but it will be understood that the types and methods described are nonlimiting.

US 5,492,742 (Zenner) describes oxygen scavenging packages and containers which comprise a composition of a carrier, such as a polymer, which is permeable to both oxygen and water or water vapour and an oxygen scavenging compound of an organic compound or salt thereof dispersed relatively uniformly throughout the polymer in an amount effective to act as an oxygen scavenger. The oxygen scavenging compound is a salicylic acid chelate or complex of a transition metal or a salt thereof. The oxygen scavenging composition is activated for scavenging oxygen by contact with water or water vapour which permeates into or through the carrier. A reducing agent of an ascorbate compound may be added to enhance the performance of the salicylic acid chelate or complex. The oxygen scavenging compound may be added to the composition in a dry state, and is inactive until activated for oxygen scavenging by contact with water or water vapour.

There is a need for a material or product which can rapidly reduce oxygen levels inside a package of products which are wet or moist (or which are capable of generating moisture inside their packaging) without adversely changing taste, aroma, or functionality of such packaged foodstuffs, beverages and pharmaceuticals. Persons skilled in the art have considered the addition of various agents into the packaging of such products in an attempt to meet this need.

Japanese patent application 61-238,836 discloses a packaging film made from a thermoplastic such as low density polyethylene ("PE"), which includes ascorbic acid alone or in combination with an aliphatic polycarboxylic acid. This film is disclosed as having good gas barrier properties.

Japanese patent application 54-022,281 discloses a fruit tray made of a thermoplastic foam base having a thin layer of ascorbic acid or erythorbic acid (or one of their alkali metal salts) on the face of indentations in the tray upon which the fruit is to be placed.

Salicylic acid complexes and their reactivities towards oxygen are generally known and are described in Zanello et al., Inorganica Chim. Acta 1983, vol. 74, pp. 89-95 and Cini et al., Inorganica Chim. Acta 1984, vol. 88, pp. 105-113.

In one embodiment of the invention, the oxygen scavenging composition comprises a carrier, such as a polymer, preferably a thermoplastic polymer, which is permeable to oxygen and water or water vapour; and a transition metal complex or chelate of a salicylic acid or a salicylate salt, whether or not substituted, dispersed relatively uniformly through the carrier and added in an amount sufficient to act as an effective-oxygen scavenger.

The transition metal of the chelate is preferably iron, copper, cobalt, or nickel; most preferably it is either iron or copper. The transition metal used to make the chelate or complex may be supplied as a simple salt, such as iron or copper chloride, iron or copper sulfate, iron gluconate, nickel sulfate, or cobalt chloride, but is present as part of the chelate or complex.

It is also possible, and in some cases preferred, to include a reducing agent, such as an ascorbate compound, in the polymer in an amount sufficient to enhance, preserve or augment the oxygen scavenging properties of the transition metal chelate or complex. Ascorbic acid, in its D- or L- form, or a derivative, analog or salt thereof, may be used as a preferred reducing agent, since it also has oxygen scavenging properties.

The oxygen scavenging material is uniformly dispersed in and throughout the carrier by a direct mixing technique. Advantageously, the oxygen scavenging material is mixed or blended into the carrier in a dry state. The oxygen scavenging capabilities of these compositions are later activated by contact with water or water vapour which permeates into or through the carrier.

US 5,641,825 (Bacskai) describes a composition of matter having oxygen scavenger capabilities. The composition comprises a blend of a first polymeric component comprising a polyolefin, the first polymeric component having been grafted with an unsaturated carboxylic anhydride or an unsaturated carboxylic acid, or combinations thereof, or with an epoxide; a second polymeric component having OH, SH or NHR.sup.2 groups where R.sup.2 is H, C.sub.1 -C.sub.3 alkyl, substituted C.sub.1 -C.sub.3 alkyl; and a metal salt capable of catalyzing the reaction between oxygen and the second polymeric component, the polyolefin being present in an amount sufficient so that the blend is non phase-separated. In the preferred composition maleic anhydride is the grafted material, the second polymeric component is MXD6 nylon and the metal is cobalt. A method of providing a homogeneous blend of a polyolefin with a second polymeric component having OH, SH or NHR.sup.2 groups is also set forth. Articles such as containers for foods and beverages utilizing such compositions and/or such method are provided.

US 5,952,066 is directed to the novel use of an aliphatic polyketone as an oxygen scavenger in a structure for the packaging of oxygen-sensitive products. In contrast to the prior art which would modify the aliphatic polyketone to render it less reactive with and less permeable to oxygen, this invention utilizes the polymer's high oxygen reactivity to effectively capture any oxygen which may enter the product and thus enhance the shelf life. As an additional benefit, the carbon dioxide (CO.sub.2) which builds up in the package sidewall (as a degradation product) would be expected to reduce the migration of CO.sub.2 from the food product.

In another embodiment, a monolayer transparent package is provided wherein an aliphatic polyketone is blended or copolymerized with other polymers. For example, a blend comprising 0.1 to 10% by total weight of a polyketone terpolymer scavenger, and the remainder PET, is used to form an injection molded preform and transparent expanded preform beverage bottle. At relatively low levels, the polyketone polymer remains amorphous and the container substantially transparent (in contrast to the highly crystalline and opaque barrier polyketone proposed in the art). In this embodiment, the terpolymer may scavenge oxygen from the container based on direct food contact with the product.

It is possible to introduce a second olefinic monomer into the polymerization, such as propylene, which will substitute randomly for ethylene, and in alternation with carbon monoxide, to produce the terpolymer poly(ethylene-alt-carbon monoxide)-stat-(propylene-alt-carbon monoxide) (hereinafter E/P/CO terpolymer. E/P/CO is just one example of a terpolymer, there being many other possible terpolymers with varying properties. Alternatively, it is possible to introduce one or more other olefin monomers that will copolymerize, such as acrylates, methacrylates, alkyl compounds, vinyl acrylate, vinylsilanes, vinyl chloride, etc. Additives such as aldol blocking agents, lubricants, release agents, etc. may be used to enhance processing properties and to reduce the tendency for aldol condensation.

US 6,254,804 discusses a variety of oxygen scavenging materials that have been incorporated directly into the packaging structure. This technique (hereinafter referred to as "active oxygen barrier") can provide a uniform scavenging effect throughout the package and can provide a means of intercepting and scavenging oxygen as it passes through the walls of a package, thereby maintaining the lowest possible oxygen level throughout the package. Active oxygen barriers have been formed by incorporating inorganic powders and/or salts as part of the package. See, e.g., U.S. Pat. Nos. 5,153,038, 5,116,660, 5,143,769, and 5,089,323.

EP 0 519 616 discloses an oxygen scavenging composition that includes a blend of an epoxide, a first polymeric component grafted with an unsaturated carboxylic anhydride and/or acid, a second polymeric component including OH, SH, or NHR.sup.2 groups where R.sup.2 is H, C.sub.1-C.sub.3 alkyl, or substituted C.sub.1 -C.sub.3 alkyl moiety, and a metal salt capable of catalyzing the reaction between oxygen and the second polymeric component. The first polymeric component is present in an amount sufficient to ensure that the blend is non-phase separated. A blend of polymers is utilized to obtain oxygen scavenging, and the second polymeric component is preferably a (co)polyamide such as MXD6.

Another type of active oxygen barrier is illustrated in EP-A-0 301 719, EP-A-0 380 319, PCT publication no. WO 90/00578, and PCT publication no. WO 90/00504. See also U.S. Pat. Nos. 5,021,515, 5,194,478, and 5,159,005. The disclosed oxygen scavenger includes polyamide-transition metal catalyst compositions. Through catalyzed scavenging by the polyamide, the package wall regulates the amount of oxygen reaching the interior of the package.

Oxygen scavenging compositions that include transition metal catalysts and ethylenically unsaturated hydrocarbon polymers which have an ethylenic double bond content of from 0.01 to 10 equivalents per 100 grams of polymer are disclosed in U.S. Pat. No. 5,399,289. Various conventional homopolymers, copolymers, and polymer blends are disclosed.

The use of a transition metal and a photoinitiator to facilitate initiation of effective scavenging activity of ethylenically unsaturated compounds is taught in U.S. Pat. No. 5,211,875.

PCT publication nos. WO 95/02616 and WO 96/40799 disclose a scavenger composition that includes a transition metal salt and a copolymer (of ethylene and a vinyl monomer) having ether, amino, carboxylic acid, ester, or amide functionalities pendent therefrom. PCT Application WO 96/40799 describes the use of a variety of ethylenic materials with benzylic, or ether containing side chains. Some of these materials may be prepared by esterification or transesterification of a polymer melt. The use of pendent cyclic groups containing unsaturation is generally referred to.

Accordingly the patent in question seeks to address the problems associated with scission products of oxygen scavengers, and seeks also to provide a group of compounds and substances (as well as films and plastic materials including same) which have an advantage over the prior art in terms of reduced quantities of scission products.

Ideally, a polymeric material for use in an oxygen scavenging composition should exhibit good processing characteristics, be able to be formed into useful packaging materials or have high compatibility with those polymers commonly used to make packaging materials, and not produce byproducts which detract from the color, taste, or odor of the packaged product. It has been found that when the ethylenic unsaturation is contained within a cyclic group, substantially fewer and less byproducts are produced upon oxidation as compared to analogous non-cyclic materials. Optimally, a packaging material formed from such a composition can retain its physical properties after significant oxygen scavenging. Oxygen scavenging compounds for use in plastic films are relatively well known.

It has been found that materials containing certain cyclohexenyl functionalities are excellent oxygen absorbers when compounded with a transition metal salt and optionally a photoinitiator, and that when these materials oxidize they produce very low levels of oxidation byproducts. This is in marked contrast to the known art, where excellent oxygen absorbers can be obtained from the use of linear unsaturated compounds compounded with a transition metal salt, and a photoinitiator, but where the levels of oxidation byproducts are excessively high. It is thought that this improvement is obtained because mild oxidation of cyclohexene does not break bonds on the ring structure whilst oxidation of a linear unsaturated material such as linoleic acid or vegetable oil under similar conditions produces smaller molecules by chain scission. When incorporated into polymers, the cyclohexene containing systems are found to produce considerably less volatile byproducts than the linear unsaturated materials.

The compositions of this invention are significantly cleaner than those described in the prior art, they do not require the use of high levels of adjuncts to absorb the undesirable byproducts. Such absorbent additives are known in the art, for example see U.S. Pat. No. 5,834,079 and U.S. 08/857,276. It is also well know in the art that such additives (zeolites and silicas) adversely effect the haze and clarity of packaging structures.

The oxygen scavenging composition of the invention comprises:
(a) a polymer or lower molecular weight material containing substituted cyclohexene functionality.
(b) a transition metal catalyst; and optionally
(c) a photoinitiator.

Suitable photoinitiators are known to those skilled in the art. See, e.g., PCT publication WO 97/07161, WO 97/44364, WO 98/51758, and WO 98/51759.

In combination with the polymeric component, the oxygen scavenging composition of the present invention includes a transition metal compound as an oxygen scavenger catalyst. The transition metal catalyst can be a salt which includes a metal selected from the first, second, or third transition series of the Periodic Table.

One or more antioxidants can be incorporated into the scavenging composition of the present invention to retard degradation of the components during compounding and film formation. Although such additives prolong the induction period for oxygen scavenging activity to occur in the absence of irradiation, the layer or article (and any incorporated photoinitiator) can be exposed to radiation at the time oxygen scavenging properties are required. Suitable antioxidants include 2,6-di(t-butyl)-4-methylphenol (BHT), 2,2'-methylene-bis(6-t-butyl-p-cresol), triphenylphosphite, tris-(nonylphenyl)phosphite, dilaurylthiodipropionate, vitamin E (.alpha.-tocopherol), octadecyl 3,5,-di-tert-butyl-4-hydroxyhydrocinnamate, tetrakis[methylene(3,5-di-tert-butyl-4-hydroxyhydrocinnamate)]methane and the like.

When an antioxidant is included as part of the composition of the present invention, it preferably is present in an amount which prevents oxidation of the components of the oxygen scavenging composition as well as other materials present in a resultant blend during formation and processing; however, the amount preferably is less than that which interferes with the scavenging activity of the resultant layer, film, or article after initiation has occurred. The amount needed in a given composition can depend on the components present therein, the particular antioxidant used, the degree and amount of thermal processing used to form the shaped article, and the dosage and wavelength of radiation applied to initiate oxygen scavenging. Typically, such antioxidant(s) are used in an amount of from about 0.01 to about 1% (by wt.).

Other additives that also can be included in the oxygen scavenging composition of the present invention include, but are not necessarily limited to, fillers, pigments, dyestuffs, processing aids, plasticizers, antifog agents, antiblocking agents, and the like.

The composition of the present invention can provide oxygen scavenging properties at a desirable rate and capacity while having good processing and compatibility properties relative to compositions including conventional non-cyclic ethylenically unsaturated polymers. Thus, the present composition can be used to provide, by itself or as a blend with diluent polymers such as polyolefins and the like, a packaging material or film that can be manufactured and processed easily. Further, the subject oxygen scavenging composition will deplete the oxygen within a package cavity without substantially detracting from the color, taste, and/or odor of the product contained therein.

The amount of the polymeric scavenging component contained in the subject composition can range from about 1 to almost about 100%, preferably from about 5 to about 97.5%, more preferably from about 10 to 95%, even more preferably from about 15 to about 92.5%, still more preferably from about 20 to about 90%, (with all of the foregoing percentages being by weight) of the composition or layer made therefrom. Typically, the amount of transition metal catalyst can range from 0.001 to 1% (by wt.) of the scavenging composition, based on the metal content only (i.e., excluding ligands, counterions, etc.). Where one or more other scavenging compounds and/or diluent polymers are used as part of the composition, such other materials can make up as much as 99%, preferably up to about 75%, by weight of the scavenging composition. Any further additives employed normally do not make up more than 10%, preferably no more than about 5%, by weight of the scavenging composition.

US 6274210 describes an improved oxygen scavenging composition and packaging container formed therefrom. The container is suitable for storage of oxygen sensitive materials and has as part of its exposed interior surface a composition composed of a polymeric matrix with a substantially water insoluble oxygen scavenger and a substantially water-insoluble transition metal containing compound distributed therein. The oxygen scavenging composition comprises a carrier which contains (a) a non-polymeric oxygen scavenger and (b) a water-insoluble oxygen scavenging catalyst having higher affinity to organics than to water. More specifically, the catalyst is composed of a water-insoluble, compound of a transition metal. The present oxygen scavenging composition provides effective absorption of oxygen from the interior of a container without adversely affecting the color, taste or smell of the packaged material contained therein.

It is known in the art that ascorbate compounds (ascorbic acid, its salts, optical isomers, and derivatives thereof), as well as sulfite salts can be oxidized by molecular oxygen, and can thus serve as components of an oxygen scavenging formulation, for example, as a component of a closure compound. For example, U.S. Pat. No. 5,075,362, issued to Hofeldt et al., discloses the use of ascorbates in container closures as oxygen scavengers.

It is highly desired to provide an effective oxygen scavenging system suitable for packaging applications which has good oxygen absorption capabilities and which does not leach out of the system to adversely effect the color, taste or smell of the packaged material.

It is further desired to provide an improved container which incorporates the subject oxygen scavenging composition as a part of the interior of the container to provide effective oxygen scavenging without adversely effecting the color, taste or smell of the packaged material.

The present invention is directed to an oxygen scavenging composition capable of providing good oxygen absorption capabilities while not adversely affecting the color, taste or smell of material packaged within a container having said composition as a part thereof. The present oxygen scavenging composition is composed of a polymeric matrix having an ascorbate compound and a substantially water-insoluble, organic compound of a transition metal distributed within the matrix.

In one aspect of the present invention there is provided an oxygen scavenging composition comprising at least one non-polymeric oxygen scavenging material and at least one substantially water-insoluble transition metal compound effective to catalyze the reaction of oxygen with the oxygen scavenging material. In a preferred embodiment of the present invention, the oxygen scavenging composition is composed of at least one water-insoluble oxygen scavenging material and at least one water-insoluble transition metal compound.

In another aspect of the present invention there is provided a polymeric composition comprising a polymer matrix having the above described oxygen scavenging composition incorporated therein.

In. particular, the polymeric material can be generally selected from polyolefins as, for example, polyethylene, polypropylene, ethylene/propylene copolymers, acid modified ethylene/propylene copolymers, polybutadiene, butyl rubber, styrene/butadiene rubber, carboxylated styrene/butadiene, polyisoprene, styrene/isoprene/styrene block copolymers, styrene/butadiene/styrene block copolymers, styrene/ethylene/ butylene/styrene block copolymers, ethylene/vinyl acetate copolymers, ethylene/acrylate and ethylene/ (meth) acrylate copolymers (for instance, ethylene/butyl acrylate or ethylene/butyl methacrylate copolymers), ethylene/vinyl alcohol copolymers, vinyl chloride homopolymers and copolymers, styrene/acrylic polymers, polyamides, and vinyl acetate polymers, and blends of one or more of these. Polyethylenes found useful in forming the subject composition include high density polyethylene (HDPE), low density polyethylene (LDPE), linear low density polyethylene (LLDPE), ultra-low density polyethylene (ULDPE) and the like as well as copolymers formed from ethylene with one or more other lower alkenes (e.g., octene) and the like.

In this embodiment, particularly preferred compositions according to the invention are thermoplastic compositions formed of polyethylene or copolymers of polyethylene such as, for example, ethylene/vinyl acetate and the like or polyethylene blends such as, for example blends of HDPE and butyl rubber; polyethylene and ethylene/vinyl acetate copolymer; as well as polyethylene and styrene/butadiene/styrene block polymer and the like. The polyethylene, if used, is preferably a low density polyethylene, and may be a very low or ultra low density polyethylene which may be branched or linear. The ethylene/vinyl acetate copolymer, if used, preferably has a melt index in the range 3 to 15, preferably 5 to 10, and generally contains 5 to 40%, preferably 5 to-30%, vinyl acetate.

The oxygen scavenger agents found useful in providing an effective oxygen scavenging composition of the present invention are ascorbates and isoascorbates (as free acid, salts and derivatives), alkali metal, alkaline earth metal or ammonium sulfite salts or mixtures thereof. The most preferred oxygen scavenger agents are water insoluble ascorbates.

The subject oxygen scavenging composition is preferably formed using ascorbates or isoascorbate compounds or mixtures thereof. The ascorbates and isoascorbates are preferably introduced into the composition as an ionic metal salt such as alkali metal, or alkaline earth metal salt or as an ester of an organic acid (esterified at the 5 or 6 position hydroxyl group of ascorbic acid) or other derivatized ascorbate [e.g., in which the 5 or 6 hydroxyl group is reacted with an organic compound to provide an unsubstituted or substituted (carbonyl, carboxyl, hydroxy,ether) branch group(s) therefrom]. The oxygen scavenger ascorbate and/or isoascorbate component may be supplemented with other known reducing agents as, for example, a second ascorbate or isoascorbate, tannin, sulfite and the like. It is preferred that the ascorbate and/or isoascorbate be the sole oxygen scavenger or at least be the major scavenger agent of a mixture of oxygen scavengers. The term "ascorbate" shall refer herein and in the appended claims unless specifically stated otherwise, to ascorbic acid and isoascorbic acid as the free acid, their salts, their ester derivatives and other derivatives which provide ascorbate capable of reacting with oxygen under redox conditions.

The oxygen scavenging composition can be formed using sulfite salts of an alkali metal, an alkaline earth metal, transition metal or ammonium cation or mixtures of said salts. The sulfites can be used as the sole oxygen scavenging agent or, preferably, can be used in combination with at least one ascorbate. When mixtures are used, it is preferred that the ascorbate be the major scavenging agent of the present composition.

In a preferred embodiment the oxygen scavenging agent can be selected from water-insoluble ascorbate compounds, water-insoluble sulfite salts and mixtures thereof. Water-insoluble sulfites are, for example, alkaline earth metal and transition metal sulfites. Water-insoluble ascorbates are described herein below. The scavenging agent may have any degree of water-insolubility. The lower the water solubility the more preferred the agent. For example, the agent can have water solubility of less than 10 gm per 100 cc water, preferably less than 4 gram, more preferably less than 1 gm and most preferably less than 0.1 gm per 100 cc water at 25.degree. C.

The most preferred oxygen scavenging agents of the present composition are selected from ascorbate compounds which have limited or no water solubility. The ascorbates and isoascorbates are preferably introduced into the composition as an alkaline earth metal salt or as an ester of a fatty acid or other organic derivative (derivatized at either the 5 or 6 or both position hydroxyl group of ascorbic acid). The oxygen scavenger ascorbate component may be supplemented with other known reducing agents as, for example, a second ascorbate or isoascorbate, tannin, a sulfite salt, and the like.

The subject ascorbates are preferably introduced into the above-described polymeric matrix in the form of a substantially water-insoluble salt, as for example, an alkaline earth metal salt, such as calcium ascorbate, barium ascorbate and the like. The ascorbate may also be in the form of a C.sub.6 -C.sub.22 fatty acid ester or diester which may be fully saturated or contain unsaturation in the hydrocarbon chain with a C.sub.10 -C.sub.22 fatty acid ester being preferred. The ascorbate ester may be, for example, ascorbyl laurate, ascorbyl myristate, ascorbyl palmitate, ascorbyl stearate and the like. The saturated acid esters are preferred and most preferred is ascorbyl palmitate.

A third component of the present composition is an oxidation catalyst which has limited or no water solubility.

It has been unexpectedly found that one can provide an effective oxygen scavenging composition by utilizing an organic or inorganic transition metal compound which is substantially water insoluble; that is, it is highly hydrophobic and, when the carrier is a polymer matrix, has a high affinity to the organic polymer matrix of the composition. The water-insoluble inorganic transition metal compound may be in the form of a salt or compound in which the transition metal is associated with other elements or groups by ionic or covalent bonds.

The water-insoluble organic transition metal compound may be in the form of a chelant, complex or organic carboxylic acid salt. The water insolubility of the catalyst should be less than 4 grams, preferably less than 2 grams, still more preferably less than 1 gram, and most preferably less than 0.1 gram per 100 cc of water at 25.degree. C. Substantially complete water insolubility is highly desired.

It is preferred that the transition metal compound be a compound having the transition metal in its highest oxidation state. The term "compound" as used as used in the context of transition metal oxidation state refers to materials which preferably has the transition metal in its higher active valence state and is bound to a counter moiety as in a salt, complex or other form to provide a stable material. The transition metals are the series of metals in the Periodic Table from scandium to zinc (i.e., Sc, Ti, V, Cr, Mn, Fe, Co, Ni, Cu and Zn). The preferred compounds are those of copper and iron with copper compounds being most preferred. Even though these catalysts have a low propensity to migrate from the carrier, and in particular the polymeric matrix in which they are contained, into the aqueous phase where the oxidation is deemed to occur, it has been unexpectedly found that the present oxygen scavenging composition gives comparable or better performance than typical systems using water soluble catalysts.

Other transition metal compounds providing usable catalysts include transition metal-ion-loaded zeolites. It is known that metal loaded zeolites, wherein the metal is in the zero oxidation state, can function as primary oxygen scavengers and that at least some of the same metals do not appreciably scavenge oxygen in other oxidation states. It has been found, however, that the metal ion-loaded zeolite with the metal in the higher valence state can be used to catalyze oxygen scavenging activity of another primary oxygen scavenger.

The preferred transition metal compounds are metal salts of mono- and di-carboxylic acids having a carbon chain length of C.sub.2 -C.sub.20 or so. The carbon chain can be aliphatic or aromatic, substituted or unsubstituted, and may contain unsaturation, and may be fatty acids. These salts have low to no solubility in water at ambient temperature. Examples of aliphatic monocarboxylic acids include acetic, propionic, butyric, valeric, lauric, tridecanoic, myristic, pentadecanoic, palmitic, stearic, nonadecanoic acids and the like; of aliphatic dicarboxylic acids include malonic, succinic, glutaric, adipic, pimelic, azelaic, sebacic acids and the like; acids having unsaturation include hydrosorbic, sorbic, butyric, glutaconic, hydromuconic, octenedioic acid and the like; and aromatic acids including benzoic acid and the like. The acid may be substituted with hydrocarbyl groups which may be straight or branched chains, typically aliphatic having 1 to 5 carbon atoms or aromatic groups. The acids may have other substitution groups which do not effect the contemplated material to be contained in the resultant package container as is well known by those skilled in the art. The term "fatty acid", when used, is employed for convenience, and it is not intended to signify that it must be derived from natural sources, since it may be manufactured synthetically. The term refers to higher carbon monoacids, preferably having the carboxyl group located terminally. The term "hydrocarbyl" is used herein to include substantially hydrocarbyl groups as well as purely hydrocarbyl groups. The description of these groups as being substantially hydrocarbyl means that they contain no non-hydrocarbyl substituents or non-carbon atoms which significantly affect the hydrocarbyl characteristics or properties of such groups relevant to their uses as described herein.

Thus, the subject oxygen scavenging composition requires a water-insoluble transition metal compound in conjunction with a scavenger agent selected from an ascorbate compound, sulfite salt or mixtures thereof. It is preferred that the catalyst be an organic transition metal compound, as described hereinabove. Further, it is preferred that the scavenger agent be selected from substantially water-insoluble ascorbates or sulfites, as described above. Thus, the preferred combination of scavenger and catalyst is such that both the scavenger and catalyts are water insoluble and most preferred combination is formed from a water-insoluble ascorbate and an organic transition metal compound. The transition metals preferred are copper and iron with copper being most preferred. The agent and catalyst are in a carrier which is preferably a polymer matrix, as described above.

It has been unexpectedly found that the present oxygen scavenging composition gives comparable or better performance than typical systems using water soluble catalyst, even though these catalysts have a low propensity to migrate from the polymeric matrix in which they are contained into the aqueous phase where the oxidation is deemed to occur.

The oxygen scavenger agent may be present in a wide range of amounts depending on the specific application to which the subject composition is applied. Normally, it should be present in at least about 0.1 weight percent based on the polymer matrix of the composition. As exemplified below, amounts of from 0.1 to 90 weight percent, preferably from 1 to 60 and most preferably from 2-60 weight percent provide effective oxygen scavenging when in the present composition.

The amount of the scavenger is dependent on the type of application. When the scavenger is incorporated into a gasket, the amount is normally at least 0.1 weight percent based on the polymeric matrix material, generally at least 1% and preferably at least 2%. It is generally unnecessary for the amount to be above 20% and 4%-10% is often a convenient maximum. Expressed in an alternative manner, the amount of scavenger is typically in the range 0.001 to 2 grams, often 0.02 to 0.1 grams, per container.

When the composition is in the form of a film, coating, mat, pouch or sachet, the oxygen scavenger should be present in an amount to effectively scavenge oxygen during the contemplated storage period of the container for the appropriate contents. The amount is normally in the range of from 0.01 to 2 grams per container of normal size.

In the case of a plastisol, lacquer, or hotmelt applied to the center panel of a closure, where the matrix does not otherwise serve as a gasket, scavenger loadings can be much higher. For example, loadings of 20 weight percent to 60%, or in some cases up to 90%, are workable.

The catalysts described above should be present in the subject composition in mole ratio of ascorbate to transition metal of from about 3000:1 to 20:1 with from 2000:1 to 20:1 being preferred and from 1000:1 to 100:1 being most preferred. In certain applications the ratio may be greater or lesser to provide for effective scavenging of oxygen.

By the invention it is possible to greatly prolong the product quality or shelf life of an oxygen sensitive material in a sealed container by reducing the degree of oxygen degradation.

It is preferred that the scavenger agent remain substantially inert in the subject composition until it is contained within a sealed container. As mentioned above, the composition as whole is preferably anhydrous and the polymeric matrix is also preferably anhydrous. Therefore, the polymeric matrix substantially protects the scavenger agent from moisture under normal atmospheric conditions. Exposure of the composition to the high humidity that normally exists within a sealed container results in sufficient permeation of moisture into the composition as part of the container to initiate a satisfactory degree of scavenging and result in improved shelf life of the packaged material. However, the scavenging reaction can be further accelerated by heating the composition in the closed container to cause increased permeation of moisture. Thus, preferably the scavenger is a material that remains substantially inert in the carrier until the scavenging reaction is accelerated by heating in the presence of moisture.

For example, the scavenging reaction of the present composition is accelerated by pasteurizing (typically at 50.degree. to 100.degree. C.) or sterilizing (typically at 100.degree. to 150.degree. C.) the container after filling it with an aqueous-based fill and sealing it, using the composition of the invention. This triggering appears to be a consequence of the composition, when heated, permitting moisture to permeate into the composition and to become trapped in the composition thereby bringing the scavenger into contact with sufficient water to permit reaction with oxygen. This oxygen may permeate through the composition either from oxygen trapped within the container when it was filled or which subsequently enters the container from the surrounding atmosphere.

It may be desirable to include in that composition a material, for instance a surfactant such as sodium dodecylbenzene sulfonate, which will increase the permeability of the composition to water and a suitable amount of a surfactant such as this is between 0.1 and 1.0% by weight.

In preferred embodiments, the concentrate is diluted in a ratio of between about 1:38 and 1:1, and more preferably between about 1:13 and 1:1 concentrate to base resin. In these concentrate formulations, it is preferred to use an amount of oxygen scavenging compound ranging from about 10 to 50% by weight and more preferably from about 20 to 40% by weight (i.e., between about 500 and 2500, and preferably between 1000 and 2000 micromoles of scavenger compound per gram of polymer for compounds having molecular weights of between 200 and 500 grams per mole). When an ascorbate is used as the scavenger, the catalysing agent of the transition metal element compound or complex may be used in an amount of about 0.3 to 8% by weight (i.e., between 40 and 200 micromoles per gram of polymer). More preferably, the catalysing agent is used in an amount of about 0.6 to 2% by weight.

It will be understood by those skilled in the art that the percentages of the various types of blend components illustrated in the above examples may be varied depending on the desired properties of the moulding, and that the range of percentages of the types of blend components that will produce acceptable mouldings may be determined by experimentation.

## Claims

1. A process for the manufacture of a flexible-thin-walled article, which process comprises injection moulding a blend of (a) at least one polymer and (b) at least one high melt flow compatible polymer having an MFI of greater than 300 g/10min, wherein the flexible-thin-walled article is a tube; wherein
MFI is measured according to ASTM D 1238, 2.16kg; 230 °C; wherein
component (a) is present in an amount of from 40 to 99.9 weight percent of the blend based on the total weight of (a) and (b) and forms the continuous or co-continuous phase of the blend; wherein
component (a) is at least one isostatic, syndiotactic or atactic polypropylene homopolymer or α-olefin copolymer; and wherein component (b) is an ethylene, propylene, or butene homo or α-olefin copolymer or terpolymer.

2. A process according to claim 1, wherein at least on of (a) and (b) includes a polymer formed using a metallocene or similar catalyst system.

3. A process according to claim 2, wherein both components (a) and (b) include a propylene and/or ethylene polymer or copolymer.

4. A process according to claim 1, wherein the extractables content for the compositions of the invention and mouldings therefrom is less than or equal to 2.0 wt%.

5. A process according to claim 1, wherein the at least one polymer (a) is a plastomer, substantially linear or branched polymer in which polypropylene constitutes over 50% of the polymer and which has an MFI of greater than 100.

6. A process according to claim 1, wherein (a) and/or (b) is a polypropylene homo- or co-polymer in which the tacticity varies within the range of between 25 and 60% [mmmm] pentad concentration.

7. The process according to claim 1, wherein (a) is a propylene polymer with 5-25% by weight ethylene-derived units.

8. The process of claim 1, wherein the blend comprises a dispersed phase of a greater crystallinity and a continuous phase of lesser crystallinity.

9. The process of claim 8, wherein the dispersed phase comprises a stereospecific polypropylene and the continuous phase comprises a copolymer of propylene and at least one C₂ or C₄-C₂₀ α-olefin.

10. The process of claim 9, wherein the stereospecific polypropylene is an isotactic polypropylene and the copolymer is of propylene and ethylene.

11. The process of claim 1, wherein the blend comprises a crystalline isotactic or syndiotactic polypropylene with a semi-crystalline α-olefin polypropylene copolymer of the same tacticity as the crystalline isotactic or syndiotactic polypropylene.

12. The process according to claim 1, wherein one polymer in the blend has a crystallinity that is at least 5% higher than the other polymer in the blend.

## Patentansprüche

1. Verfahren zur Herstellung von flexiblen dünnwandigen Artikeln, wobei das Verfahren des Spritzgießen eines Blends von (a) mindestens einem Polymer und (b) mindestens einem einen hohen Schmelzfluss aufweisenden verträglichen Polymer mit einem MFI von mehr als 300 g/10 min umfasst, wobei es sich bei dem flexiblen dünnwandigen Artikel um einen Schlauch handelt, wobei der MFI gemäß ASTM D 1238, 2,16 kg, 230 °C, gemessen wird, wobei
Komponente (a) in einer Menge von 40 bis 99,9 Gewichtsprozent des Blends, bezogen auf das Gesamtgewicht von (a) und (b), vorliegt und die kontinuierliche oder cokontinuierliche Phase des Blends bildet, wobei
es sich bei Komponente (a) um ein isotaktisches, syndiotaktisches oder ataktisches Polypropylen-Homopolymer oder α-Olefin-Copolymer handelt und wobei
es sich bei Komponente (b) um ein Ethylen-, Propylen- oder Buten-Homopolymer oder -α-Olefin-Copolymer oder Terpolymer handelt.

2. Verfahren nach Anspruch 1, wobei mindestens eines von (a) und (b) ein unter Verwendung eines Metallocens oder eines ähnlichen Katalysatorsystems gebildetes Polymer enthält.

3. Verfahren nach Anspruch 2, wobei beide Komponenten (a) und (b) ein Propylen- und/oder Ethylen-Polymer oder -Copolymer enthalten.

4. Verfahren nach Anspruch 1, wobei der Gehalt an extrahierbaren Anteilen für die erfindungsgemäßen Zusammensetzungen und Formkörper daraus kleiner oder gleich 2,0 Gew.-% ist.

5. Verfahren nach Anspruch 1, wobei es sich bei dem mindestens einen Polymer (a) um ein plastomeres, weitgehend lineares oder verzweigtes Polymer handelt, in dem Polypropylen über 50 % des Polymers ausmacht und das einen MFI von mehr als 100 aufweist.

6. Verfahren nach Anspruch 1, wobei es sich bei (a) und/oder (b) um ein Polypropylen-Homopolymer oder -Copolymer handelt, in dem die Taktizität im Bereich zwischen 25 und 60 % [mmmm]-Pentadenkonzentration variiert.

7. Verfahren nach Anspruch 1, wobei es sich bei (a) um ein Propylenpolymer mit 5-25 Gew.-% von Ethylen abgeleiteten Einheiten handelt.

8. Verfahren nach Anspruch 1, wobei das Blend eine disperse Phase mit höherer Kristallinität und eine kontinuierliche Phase mit geringerer Kristallinität umfasst.

9. Verfahren nach Anspruch 8, wobei die disperse Phase ein stereospezifisches Polypropylen umfasst und die kontinuierliche Phase ein Copolymer von Propylen und mindestens einem C₂- oder C₄-C₂₀-α-Olefin umfasst.

10. Verfahren nach Anspruch 9, wobei es sich bei dem stereospezifischen Polypropylen um ein isotaktisches Polypropylen handelt und das Copolymer aus Propylen und Ethylen besteht.

11. Verfahren nach Anspruch 1, wobei der Blend ein kristallines isotaktisches oder syndiotaktisches Polypropylen mit einem teilkristallinen α-Olefin-Polypropylen-Copolymer mit der gleichen Taktizität wie das kristalline isotaktische oder syndiotaktische Polypropylen umfasst.

12. Verfahren nach Anspruch 1, wobei ein Polymer in dem Blend eine Kristallinität aufweist, die mindestens 5 % höher ist als bei dem anderen Polymer in dem Blend.

## Revendications

1. Procédé pour la fabrication d'un article à paroi mince flexible, lequel procédé comprenant le moulage par injection d'un mélange (a) d'au moins un polymère et (b) d'au moins un polymère compatible à indice de fluidité à chaud élevé possédant un MFI supérieur à 300 g/10 min, l'article à paroi mince flexible étant un tube ;
le MFI étant mesurée selon la norme ASTM D 1238, 2,16 kg ; 230 °C ;
le composant (a) étant présent en une quantité allant de 40 à 99,9 pour cent en poids du mélange sur la base du poids total de (a) et de (b) et formant la phase continue ou co-continue du mélange ;
le composant (a) étant au moins un homopolymère de polypropylène ou un copolymère d'a-oléfine, isotactique, syndiotactique ou atactique ; et
le composant (b) étant un homopolymère d'éthylène, de propylène, ou de butène, ou un copolymère ou un terpolymère d'a-oléfine avec l'éthylène, le propylène, ou le butène.

2. Procédé selon la revendication 1, au moins l'un parmi (a) et (b) comportant un polymère formé à l'aide d'un métallocène ou d'un système de catalyseur similaire.

3. Procédé selon la revendication 2, les deux composants (a) et (b) comportant un polymère ou un copolymère de propylène et/ou d'éthylène.

4. Procédé selon la revendication 1, la teneur en composés extractibles pour les compositions de l'invention et les moulages à partir de celle-ci étant inférieure ou égale à 2,0 % en poids.

5. Procédé selon la revendication 1, l'au moins un polymère (a) étant un plastomère, un polymère sensiblement linéaire ou ramifié dans lequel le polypropylène constitue plus de 50 % du polymère et qui possède un MFI supérieur à 100.

6. Procédé selon la revendication 1, (a) et/ou (b) étant un homopolymère ou un copolymère de type polypropylène dans lequel la tacticité varie dans la plage comprise entre 25 et 60 % [mmmm] de concentration en pentade.

7. Procédé selon la revendication 1, (a) étant un polymère de propylène comportant 5 à 25 % en poids de motifs issus d'éthylène.

8. Procédé selon la revendication 1, le mélange comprenant une phase dispersée d'une plus grande cristallinité et une phase continue de cristallinité moindre.

9. Procédé selon la revendication 8, la phase dispersée comprenant un polypropylène stéréospécifique et la phase continue comprenant un copolymère de propylène et au moins une α-oléfine en C₂ ou C₄₋₂₀.

10. Procédé selon la revendication 9, le polypropylène stéréospécifique étant un polypropylène isotactique et le copolymère étant composé de propylène et d'éthylène.

11. Procédé selon la revendication 1, le mélange comprenant un polypropylène cristallin isotactique ou syndiotactique avec un copolymère de polypropylène α-oléfine semi-cristallin de la même tacticité que le polypropylène cristallin isotactique ou syndiotactique.

12. Procédé selon la revendication 1, un polymère dans le mélange possédant une cristallinité qui est au moins 5 % plus haute que l'autre polymère dans le mélange.
